(19) Europäisches Patentamt
European Patent Office
Office européen des brevets

(11) **EP 2 457 083 B1**

(12) **FASCICULE DE BREVET EUROPEEN**

(45) Date de publication et mention
de la délivrance du brevet:
**25.01.2017 Bulletin 2017/04**

(21) Numéro de dépôt: **10733003.7**

(22) Date de dépôt: **19.07.2010**

(51) Int Cl.:
**G01N 23/203** (2006.01)   **G01V 5/00** (2006.01)

(86) Numéro de dépôt international:
**PCT/EP2010/060414**

(87) Numéro de publication internationale:
**WO 2011/009833 (27.01.2011 Gazette 2011/04)**

(54) **PROCEDE ET DISPOSITIF D'IDENTIFICATION D'UN MATERIAU D'UN OBJET**

VERFAHREN UND VORRICHTUNG ZUR ERKENNUNG EINES MATERIALS EINES OBJEKTES

METHOD AND DEVICE FOR IDENTIFYING A MATERIAL OF AN OBJECT

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **20.07.2009 FR 0955011**

(43) Date de publication de la demande:
**30.05.2012 Bulletin 2012/22**

(73) Titulaire: **Commissariat à l'Énergie Atomique et aux Énergies Alternatives 75015 Paris (FR)**

(72) Inventeurs:
- **FABIANI, Elisa**
  **F-38500 La Buisse (FR)**
- **RINKEL, Jean**
  **38000 Grenoble (FR)**
- **TABARY, Joachim**
  **F-38100 Grenoble (FR)**
- **DINTEN, Jean-Marc**
  **F-69008 Lyon (FR)**

(74) Mandataire: **Ilgart, Jean-Christophe et al BREVALEX 95, rue d'Amsterdam 75378 Paris Cedex 8 (FR)**

(56) Documents cités:
WO-A1-2007/036359     JP-A- 61 193 057
US-A- 5 600 700       US-A1- 2005 163 282
US-A1- 2008 253 525

- SHIRO TUZI ET AL: "LOCATING THE POSITIONS OF REINFORCING BARS IN REINFORCED CONCRETE USING BACKSCATTERED GAMMA RAYS" INTERNATIONAL JOURNAL OF RADIATION APPLICATIONS ANDINSTRUMENTATION PART A: APPLIED RADIATION AND ISOTOPES, PERGAMON PRESS LTD., EXETER, GB, vol. 41, no. 10 / 11, 1 janvier 1990 (1990-01-01), pages 1013-1018, XP000172902
- RUNKLE R C ET AL: "Photon and neutron interrogation techniques for chemical explosives detection in air cargo: A critical review" NUCLEAR INSTRUMENTS & METHODS IN PHYSICS RESEARCH, SECTION - A:ACCELERATORS, SPECTROMETERS, DETECTORS AND ASSOCIATED EQUIPMENT, ELSEVIER, AMSTERDAM, NL, vol. 603, no. 3, 21 mai 2009 (2009-05-21), pages 510-528, XP026097560 ISSN: 0168-9002 [extrait le 2009-02-20]

EP 2 457 083 B1

EP 2 457 083 B1

**Description**

**DOMAINE TECHNIQUE**

La présente invention concerne un procédé et un dispositif d'identification d'un matériau d'un objet.

La détection de substances illicites dans les bagages constitue un élément important de la sécurité de la vie courante. Le but de la lutte contre le terrorisme est d'empêcher que des explosifs ou des produits chimiques dangereux placés dans des bagages soient embarqués dans des avions ou soient dissimulés dans des colis abandonnés dans des lieux publics comme des gares, le métro, ou des aéroports. Les drogues ou les cigarettes de contrebande sont également recherchées par les douaniers aussi bien dans les aéroports et qu'aux frontières.

**ÉTAT DE LA TECHNIQUE ANTÉRIEURE**

Les dispositifs d'identification de la composition chimique de matériaux d'un objet, développés jusqu'à ce jour, exploitent l'absorption du rayonnement X transmis à travers l'objet à inspecter. Cependant dans certains cas d'objets volumineux ou de colis abandonnés contre un mur, ces dispositifs fonctionnant par transmission ne conviennent pas, car il faut placer l'objet à inspecter entre la source de photons X et le détecteur détectant les photons X transmis.

D'autres dispositifs sont basés sur la rétrodiffusion. Cette technologie ne requiert l'accès qu'à un seul côté de l'objet suspect à inspecter. Dans ce cas la source de photons X et le détecteur se trouvent du même côté de l'objet. Les photons X vont rebondir sur l'objet plus que le traverser.

Cette technique devient un bon outil d'inspection pour la détection et l'identification d'explosifs qui sont des matériaux dont les atomes qui les constituent possèdent des numéros atomiques faibles, par exemple inférieurs à 10. En effet ils sont constitués de carbone, d'oxygène, d'hydrogène, d'azote. Dans ce cas, le phénomène de diffusion par effet Compton est prépondérant par rapport au phénomène d'absorption par effet photoélectrique aux énergies classiquement utilisées, comprises entre environ 50 et 200 keV.

On va maintenant décrire un dispositif d'identification d'un matériau d'un objet commercialisé par la société American Science and Engineering, Inc utilisant la technologie « 2®Backscatter » et la technologie « Flying Spot ». D'autres dispositifs similaires ont été développés par les sociétés Rapiscan ou PCO Inc.

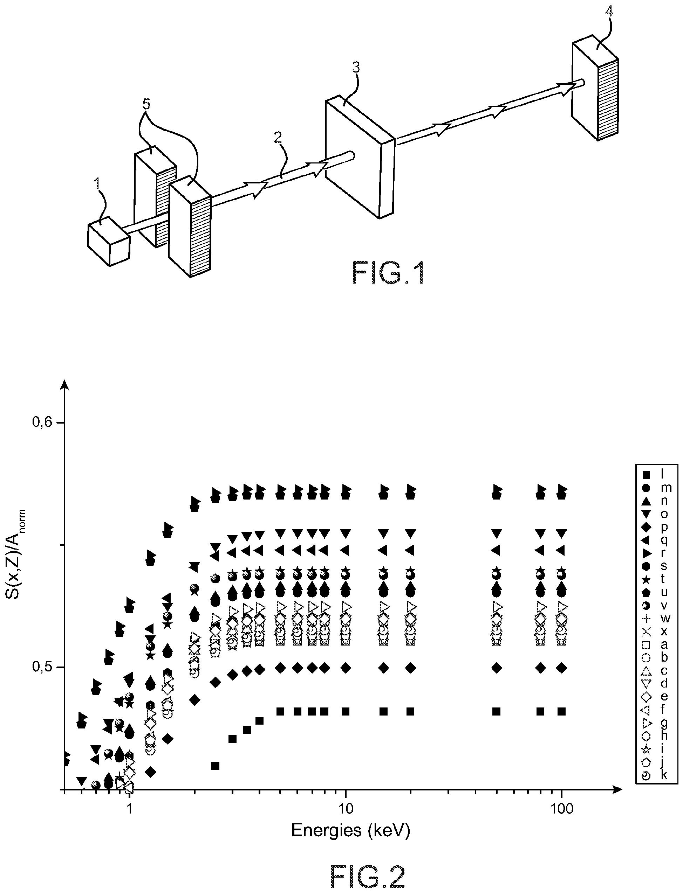

On se réfère à la figure 1. Une source de photons X 1 polychromatique fournit un faisceau de photons X 2 long et fin vers un objet à inspecter 3. Le faisceau de photons X est composé de photons d'énergies différentes. On suppose que l'objet à inspecter 3 est un bagage contenant des blocs d'explosif plastique. On a représenté un détecteur de photons X 4 en aval de l'objet à inspecter 3 et une paire 5 de détecteurs de photons X en amont de l'objet à inspecter 3 de part et d'autre du faisceau de photons X 2.

Des photons X seront donc transmis par les atomes de l'objet à inspecter 3 et détectés par le détecteur de photons X 4 aval et d'autres rétrodiffusés par les atomes de l'objet à inspecter 3 et détectés par la paire de détecteurs de photons X 5 amont.

Le faisceau de photons X 2 est animé d'un mouvement de balayage de l'objet à inspecter 3 de manière que la position du faisceau de photons X 3 soit définie à chaque instant et que chaque mesure du signal détecté par un détecteur soit corrélée à une région particulière de l'objet à inspecter 3. L'interprétation des résultats est facile et rapide. De plus, grâce au faisceau de photons X long et fin balayant, les doses de radiation peuvent être beaucoup plus faibles que dans les dispositifs d'inspection conventionnels à faisceau de photons X en éventail.

Il faut noter que la société American Science and Engineering commercialise sous la marque déposée « Z®Backscatter Van™ » un système d'inspection par rétrodiffusion seule, intégré dans un camion qui permet l'inspection de véhicules et de cargos en mouvement, le système étant à l'arrêt.

L'inconvénient du dispositif que l'on vient de décrire est que les détecteurs de photons X fonctionnent en mode d'intégration de charges. Les photons X qui arrivent sur le détecteur sont convertis en charges électriques et les charges électriques crées dans un pixel donné du détecteur sont intégrées pendant un temps d'exposition. Pendant ce temps d'exposition, on connait l'énergie totale des photons X et on peut accéder à une information unique qui est l'atténuation moyenne du matériau inspecté correspondant au pixel donné sur les différentes énergies du spectre d'irradiation puisque le faisceau de photons X est polychromatique. Cette atténuation moyenne est due à la densité $\rho$ du matériau inspecté. Mais le signal intégré ne permet pas de distinguer deux matériaux ayant la même atténuation moyenne. Il faudrait pour cela disposer de l'information supplémentaire qui est le numéro atomique Z du matériau inspecté. Cette information supplémentaire est difficilement accessible avec le signal intégré.

Le dispositif d'identification induit donc de nombreuses fausses alarmes puisque la composition chimique des explosifs est proche de celle d'un grand nombre de matériaux courants qui peuvent présenter les mêmes caractéristiques en termes de densité $\rho$.

La demande de brevet US 2008/253 525 décrit un dispositif de visualisation ou de fourniture d'informations utilisant des rayons X diffusés par effet Compton. Le brevet US 4 817 122 (JP-61 193057) décrit un appareil pour

2

déterminer la masse de constituants connus d'une substance utilisant l'énergie de photons rétrodiffusés. Enfin, l'article de Shiro Tuzi et al., "Locating the positions of Reinforcing bars in reinforced concrete using backscattered gamma rays", publié dans International Journal of radiation Applications and Instrumentation, vol.41, No10/11 (1990), décrit l'utilisation d'une source de rayons gamma et d'un détecteur collimaté pour détecteur les rayons gamma rétrodiffusés afin d'identifier des barres de renforcement en acier dans un béton.

## EXPOSÉ DE L'INVENTION

La présente invention a pour but de proposer un procédé d'identification d'un matériau dont est composé un objet, ce matériau étant enterré ou en surface de l'objet, ainsi qu'un dispositif d'identification du matériau, ce procédé et ce dispositif ne présentant pas les limitations et difficultés ci-dessus.

Un but de l'invention est de proposer un procédé d'identification fiable de substances illicites liquides ou solides contenues dans des bagages pour améliorer la sécurité dans les aéroports. Cette identification peut se faire quelle que soit la nature du bagage et la position de la substance dans le bagage.

Un autre but de l'invention est de proposer un procédé permettant de pouvoir aisément distinguer de l'eau par rapport à un explosif liquide.

Pour y parvenir, la présente invention propose d'exploiter la signature spectrale rétrodiffusée par un objet, irradié par un faisceau de photons X incident, cette signature spectrale étant délivrée par un détecteur spectrométrique. Le procédé objet de l'invention propose au moins deux irradiations de l'objet positionné à deux distances différentes par rapport à l'ensemble source de photons X-détecteur spectrométrique.

Plus précisément la présente invention propose un procédé d'identification d'un matériau d'un objet, selon la revendication 1. Ce matériau est pourvu d'un rang i (i entier), i valant un s'il est en surface et étant supérieur à un s'il est enterré sous i-1 couches, dans le procédé :

a°) on irradie une surface sensiblement plane au moins localement de l'objet avec un faisceau de photons X incident généré par une source de photons X collimatée,

b°) on mesure à l'aide d'un détecteur spectrométrique collimaté un premier flux d'un faisceau de photons X rétrodiffusé généré après diffusion, selon un angle $\theta$ de diffusion donné, du faisceau de photons X incident dans un premier volume d'inspection du matériau de rang i se trouvant à une première profondeur dans le matériau de rang i,

c°) on mesure à l'aide du détecteur spectrométrique collimaté un second flux d'un faisceau photons X rétrodiffusé généré après diffusion, selon le même angle $\theta$ de diffusion donné, du faisceau de photons X incident dans un second volume d'inspection du matériau de rang i se trouvant à une seconde profondeur dans le matériau de rang i, la seconde profondeur étant différente de la première profondeur

d°) on calcule à l'aide des mesures des deux flux de photons X ($Xi1(E_1)$, $Xi2(E_1)$) un coefficient combiné d'atténuation $\mu'$ matériau.i ($E_0$, $E_1$, $\varepsilon$) dans lequel $E_0$ est l'énergie des photons X du faisceau de photons X incident et $E_1$ l'énergie des photons X du faisceau de photons X rétrodiffusé selon l'angle de diffusion donné et $\varepsilon$ = li'1/li1 = li'2/li2, li1 respectivement li2 étant la distance parcourue par le faisceau de photons X incident dans le matériau de rang i jusqu'au premier respectivement second volume d'inspection, l1'1 respectivement li'2 étant la distance parcourue par le faisceau de photons X rétrodiffusé dans le matériau de rang i depuis le premier, respectivement, second volume d'inspection, le coefficient combiné d'atténuation comprenant un logarithme népérien d'un rapport entre les deux flux $Xi1(E_1)$, $Xi2(E_1)$ ;

e°) on définit une moyenne du coefficient combiné d'atténuation $\mu'$matériau.i($E_0$, $E_1$, $\varepsilon$) sur une plage d'énergie donnée des photons X du faisceau de photons X rétrodiffusé ;

f°) on estime la densité du matériau de rang i à partir de la moyenne du coefficient combiné d'atténuation.

Le coefficient combiné d'atténuation répond de préférence à la formule :

$$\mu'_{matériau.i}(E_0, E_1, \varepsilon) = -\frac{1}{\ell i1 - \ell i2} \ln\left(\frac{Xi1(E_1)}{Xi2(E_1)}\right)$$

Pour identifier plus précisément le matériau de rang i et déterminer sa nature chimique, on peut calculer un paramètre $\beta(E_1, Matériau.i, \theta)$ décrivant le phénomène de diffusion dans le matériau de rang i à l'aide des mesures des deux flux de photons X ($Xi1(E_1)$, $Xi2(E_1)$). Ce paramètre s'exprime par :

$$\beta(E_1, Mat\acute{e}riau.i, \theta) = \frac{Xi2(E_1)^{\frac{\ell i1}{(\ell i1 - \ell i2)}}}{Xi1(E_1)^{\frac{\ell i2}{(\ell i1 - \ell i2)}}} \; .$$

On peut utiliser ce paramètre $\beta(E_1, Mat\acute{e}riau.i, \theta)$, le coefficient combiné d'atténuation $\mu'_{mat\acute{e}riau.i}(E_0, E_1, \varepsilon)$ et la densité du matériau de rang i.

On utilise alors le rapport $\beta(E_1, Mat\acute{e}riau.i, \theta)/(k(E_0, \theta)\rho$ en fonction de la densité, $k(E_0, \theta)$ étant un paramètre indépendant du matériau de rang i mais dépendant de l'énergie du faisceau de photons X incident, de l'angle de diffusion, et de la position de la source de photons X et du détecteur spectrométrique par rapport au volume inspecté, ce rapport étant sensiblement égal au rapport du numéro atomique effectif $Z_{eff}$ du matériau sur sa masse molaire normalisée $A_{norm}$.

On peut calculer les distances li1, li2, li'1, li'2 à partir des positions relatives de la source de photons X, du détecteur spectrométrique et de l'objet et si i diffère de 1, d'une distance lj parcourue par le faisceau de photons X incident dans chacun des uns ou plusieurs matériaux de rang 1 à i-1, et d'une distance l'j parcourue par le faisceau de photons X rétrodiffusé selon l'angle $\theta$ dans chacun des uns ou plusieurs matériaux de rang 1 à i-1 en :

1°) effectuant des mesures successives du flux de faisceaux de photons X rétrodiffusés pour des volumes d'inspection situés de plus en plus profond, à partir de la couche de surface et espacés d'un pas (p), l'angle de diffusion restant sensiblement constant d'une mesure à l'autre,

2°) calculant pour un premier, un second et un troisième flux $X_1(E_1)$, $X_2(E_1)$ et $X_3(E_1)$ de faisceaux de photons X rétrodiffusés un premier coefficient combiné d'atténuation $\mu'_1(E_0, E_1, \varepsilon) = -\dfrac{1}{lj1 - lj2} \ln\left(\dfrac{X_1(E_1)}{X_2(E_1)}\right)$ et un

second coefficient combiné d'atténuation $\mu'_2(E_0, E_1, \varepsilon) = -\dfrac{1}{lj2 - lj3} \ln\left(\dfrac{X_2(E_1)}{X_3(E_1)}\right)$, avec $\varepsilon =$

lj'1/lj1=lj'2/lj2=lj'3/lj3, lj1, lj2, lj3 et respectivement l'j1, l'j2, l'j3 étant des distances parcourues par le faisceau de photons X incident et respectivement le faisceau de photons X rétrodiffusé, dans le matériau dans lequel se trouve le volume d'inspection pour lequel la mesure est effectuée, ces distances étant calculées à partir de la position relative entre la source de photons X, le détecteur spectrométrique et l'objet.

3°) comparant le premier et le second coefficient combiné d'atténuation,

4°) dès qu'une différence apparaît, la distance lj recherchée est la plus grande des distances utilisées dans la formule du premier coefficient combiné d'atténuation,

5°) en réitérant les étapes 2°) à 4°) une ou plusieurs fois en prenant trois mesures successives du flux de faisceaux de photons X rétrodiffusés dont deux sont des mesures successives utilisées pour le calcul de l'étape 2°) précédente, le calcul des distances parcourues par le faisceau de photons X dans le matériau dans lequel se trouve le volume d'inspection pour lequel la mesure est effectuée prenant en compte les distances lj et l'j déterminées précédemment.

Le facteur d'atténuation Fi peut s'exprimer par $Fi = \prod\limits_{j=1}^{i-1} e^{-\mu'_{mat\acute{e}riau,j}(E_0, E_1, \varepsilon) \cdot \ell j}$, $\varepsilon$ valant l'j/lj et $\mu'_{mat\acute{e}riau.j}(E_0,$ $E_1, \varepsilon)$ étant un coefficient combiné d'atténuation dans le matériau de rang j, ce coefficient combiné d'atténuation étant calculé à partir de deux mesures du flux de photons X de faisceaux de photons X rétrodiffusés pour deux volumes d'inspection situés à deux profondeurs différentes dans le matériau de rang j, l'angle de diffusion restant sensiblement constant, lj respectivement l'j étant des distances parcourues par le faisceau de photons X incident respectivement rétrodiffusé dans le matériau de rang j respectivement avant et après la diffusion.

Le paramètre indépendant du matériau $k(E_0, \theta)$ s'exprime par

$$k(E_0, \theta) = C(E_0, \theta) . F(E_0) \left[ \frac{d\sigma_{Kn}(E_0, \theta)}{d\Omega} \delta\omega N_a . \partial V \right]$$ avec $F(E_0)$ débit de fluence à l'énergie $E_0$ du faisceau

de photons X incident, $N_a$ nombre d'Avogadro, $\dfrac{d\sigma_{KN}(E_0, \theta)}{d\Omega}$ section efficace différentielle de diffusion par électron par effet Compton approximée par une formule dite de Klein-Nishina , $\delta\omega$ angle solide sous lequel est vu le détecteur spectrométrique depuis chaque point du volume d'inspection $\delta V$, $C(E_0, \theta)$ efficacité du détecteur spectrométrique à l'énergie $E_1$ qui est l'énergie du faisceau de photons X rétrodiffusé, ce faisceau de photons X possédant l'énergie $E_0$ avant diffusion, selon l'angle de diffusion $\theta$ donné.

Le paramètre $k(E_0, \theta)$ peut être obtenu par modélisation ou par mesures dans un matériau étalon.

La présente invention concerne également un dispositif d'identification d'un matériau d'un objet selon la revendication 8. Il comporte un ensemble source de photons X-détecteur spectrométrique collimaté, la source de photons X étant destinée à irradier une surface sensiblement plane au moins localement de l'objet avec un faisceau de photons X incident dont les photons X ont une énergie $E_0$, le détecteur spectrométrique étant destiné à mesurer un flux d'un faisceau de photons X rétrodiffusé généré après diffusion du faisceau de photons X incident dans un volume d'inspection du matériau, les photons X de faisceau de photons X ayant une énergie $E_1$, le faisceau de photons X incident et le faisceau de photons X rétrodiffusé formant un angle de diffusion dont le sommet est le volume d'inspection. Il comporte en outre :

- des moyens de réglage de la position relative entre la source de photons X, le détecteur spectrométrique et l'objet de manière à placer le volume d'inspection dans au moins deux positions à des profondeurs différentes dans le matériau tout en conservant un angle de diffusion sensiblement constant,
- des moyens de traitement des deux flux des faisceaux de photons X rétrodiffusés mesurés par le détecteur spectrométrique dans les au moins deux positions et de calcul d'un coefficient combiné d'atténuation $\mu'_{matériau}(E_0, E_1, \varepsilon)$ à l'aide de ces deux flux de faisceaux de photons X rétrodiffusés mesurés,
- des moyens d'estimation de la densité du matériau à partir du coefficient combiné d'atténuation moyenné sur une plage d'énergie des photons X du faisceau de photons X rétrodiffusé donnée.

Les moyens de traitement et de calcul peuvent permettre de calculer un paramètre $\beta(E_1, \textit{Matériau}, \theta)$ décrivant le phénomène de diffusion dans le matériau de rang i.

Le dispositif d'identification peut également comprendre des moyens de détermination de la nature chimique du matériau à l'aide du paramètre $\beta(E_1, \textit{Matériau}, \theta)$, du coefficient combiné d'atténuation $\mu'_{matériau}(E_0, E_1, \varepsilon)$ et de la densité.

Les moyens de détermination peuvent utiliser la valeur du rapport $\beta(E_1, \textit{Matériau.i}, \theta)/(k(E_0, \theta)\rho$ en fonction de la densité, le rapport traduisant la nature chimique du matériau, $k(E_0, \theta)$ étant un paramètre indépendant du matériau mais dépendant de l'énergie du faisceau de photons X incident, de l'angle de diffusion, et de la position de la source de photons X et du détecteur spectrométrique par rapport au volume inspecté.

Dans un but de simplification, il est préférable que le faisceau de photons X incident forme un angle avec une surface irradiée de l'objet qui est sensiblement égal à l'angle que fait le faisceau de photons X rétrodiffusé avec la surface irradiée de l'objet.

On conserve de préférence un même angle de diffusion sur deux mesures successives.

Les moyens de réglage peuvent rapprocher et/ou éloigner l'ensemble source de photons X-détecteur spectrométrique par rapport à l'objet et rapprocher et/ou éloigner la source de photons X du détecteur spectrométrique.

Les moyens de réglage peuvent fonctionner pas à pas, lors du rapprochement et/ou de l'éloignement de l'ensemble source de photons X-détecteur spectrométrique par rapport à l'objet, le pas étant plus petit que l'épaisseur d'une couche de matériau de l'objet de manière à ce que le volume d'inspection puisse prendre au moins deux positions dans la couche de matériau.

## BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :

la figure 1, déjà décrite, monte un dispositif d'identification d'un matériau d'un objet de l'art antérieur ;
la figure 2 est un graphique représentant la fonction incohérente de diffusion S(x, Z), pour un angle de diffusion de 120°, en fonction de l'énergie des photons X détectés pour une série de 24 matériaux d'intérêt, explosifs ou non ;
la figure 3 est une représentation du rapport du numéro atomique effectif sur la masse molaire normalisée en fonction de la densité pour une vingtaine de matériaux d'intérêt, cette représentation permettant d'identifier le matériau, cette représentation étant exploitée par le procédé de l'invention ;
la figure 4 représente un faisceau de photons X incident irradiant un matériau, un faisceau de photons X rétrodiffusé issu du faisceau de photons X incident ayant diffusé dans un volume d'inspection du matériau ;
la figure 5 représente de manière géométrique le principe multi-profondeur du procédé selon l'invention pour l'inspection d'un objet mono matériau ;

la figure 6A est une représentation des coefficients d'atténuation linéaire de matériaux en fonction de l'énergie des photons X détectés et la figure 6B montre la relation entre la densité des matériaux et la valeur de ces coefficients d'atténuation linéaire pour trois énergies, à savoir 50 keV, 100 keV et 150 keV ;

la figure 7 est une représentation de la valeur moyenne du coefficient combiné d'atténuation $\mu'_{matériau}(E_0, E_1, \varepsilon)$ en fonction de la densité de ces matériaux, cette valeur moyenne ayant été calculée dans un cas où $\varepsilon=1$, $\theta=120°$ et $E_1$ compris dans la plage 50 keV à 100 keV ;

la figure 8 illustre le principe du procédé de l'invention pour un objet multi matériaux à n couches ;

la figure 9 illustre le principe du procédé de l'invention pour un objet multi matériaux bicouche ;

la figure 10 illustre le dispositif d'identification de l'invention utilisé avec un objet cylindrique ;

les figures 11A, 11C représentent le rapport $\beta(E_1,Matériau,\theta)/\rho.k(E_0,\theta)$ simulé en fonction de la densité $\rho$ théorique pour des matériaux d'intérêt solides, respectivement liquides, contenus dans un récipient en PETP qui est un polyéthylènetéréphtalate, la figure 11B représente le rapport du numéro atomique effectif sur la masse molaire normalisée théoriques en fonction de la densité théorique ;

la figure 12 illustre, pour les mêmes matériaux solides qu'à la figure 11A le rapport $\beta(E_1,Matériau,\theta)/\rho.k(E_0, \theta)$ en fonction de $\rho$, $\beta(E_1,Matériau,\theta)$ étant calculé et $\rho$ estimé par le procédé de l'invention.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

## EXPOSÉ DÉTAILLÉ DE MODES DE RÉALISATION PARTICULIERS

On va maintenant expliquer dans le cas d'un matériau formé d'un seul élément chimique, comment l'identifier. Cet élément chimique est caractérisé par son numéro atomique Z, c'est-à-dire son nombre d'atomes, et par sa densité $\rho$.

Quand un photon X entre en collision avec un électron libre ou faiblement lié au matériau, il lui cède une partie de son énergie $h\nu$. Un photon d'énergie plus faible est alors diffusé dans une direction différente de la direction incidente, les deux directions sont séparées par un angle $\theta$ dit angle de diffusion et l'électron est éjecté de sa position. La quantité d'énergie du photon résultant $h\nu'$ est régie par l'équation de Compton.

La quantité de rayonnement diffusé Compton, pour une énergie donnée du photon X incident et un angle de diffusion donné $\theta$, est proportionnelle à ce que l'on appelle la fonction de diffusion incohérente $S(x,Z)$ qui correspond au nombre d'électrons par atome qui peuvent induire la diffusion Compton.

Dans la fonction de diffusion incohérente, le paramètre x, appelé transfert de la quantité de mouvement et exprimé en cm$^{-1}$ est défini par l'expression :

$$x = \frac{1}{\lambda_0}\sin(\theta/2) = \frac{E_0}{hc}\sin(\theta/2) \approx \frac{E_0}{12,399}\sin(\theta/2) \qquad (1)$$

$E_0$ représente l'énergie du photon X incident en keV. La section efficace différentielle atomique par diffusion Compton qui est majoritaire aux énergies supérieures à environ 10 keV est donnée par le produit de $S(x,Z)$ par la section efficace différentielle de diffusion par électron par effet Compton $\dfrac{d\sigma_{KN}(E_0,\theta)}{d\Omega}$, donnée par la formule de Klein-Nishina.

Dans le cas d'un matériau qui n'est pas un corps simple, mais qui est un mélange comportant n éléments chimiques, il est possible de généraliser et de définir la fonction de diffusion incohérente de la manière suivante :

$$S(x,Z) = \sum_{i=1}^{n} \alpha_i^{at} S(x,Z_i) \qquad (1')$$

avec $\alpha_i^{at}$ pourcentages en atomes de chaque élément et $S(x, Z_i)$ fonction de diffusion incohérente pour chaque élément, ces fonctions ont été tabulées par Hubbell et al. dans « Atomic form factors, incohérent scattering functions, and photon scattering cross sections », J. : Phys. Chem. Ref. Data 4,(1975), pages 71-538 ; erratum (1977), 6, pages 615-616.

Chaque $\alpha_i^{at}$ est défini à partir du pourcentage en masse $\omega_i$ et de la masse atomique $A_i$ de l'élément chimique i :

$$\alpha_i^{at} = \frac{\dfrac{\omega_i}{A_i}}{\displaystyle\sum_{i=1}^{n} \dfrac{\omega_i}{A_i}} \qquad (2).$$

Pour un angle de diffusion θ donné, au-delà d'une certaine énergie, on s'aperçoit que la fonction S(x,Z) tend vers une asymptote. Sur l'exemple de la figure 2, pour un angle de diffusion θ de 120°, on voit que cette asymptote est obtenue pour des énergies supérieures à environ 10 keV. On définit donc un paramètre de même nature que le numéro atomique Z, mais noté $Z_{eff}$ et appelé numéro atomique effectif. Il caractérise le mélange et correspond à l'asymptote de la fonction S(x, Z). Les inventeurs ont donc établi que la fonction S(x, Z) tend vers $Z_{eff}$. De manière similaire, on définit une masse molaire normalisée $A_{norm}$ définie par : $A_{norm} = \sum_i \alpha_i^{at} A_i$ .

Si on représente la grandeur S (x, Z) /$A_{norm}$ en fonction de l'énergie comme illustré sur la figure 2, on remarque que les courbes représentatives de différents explosifs comme le TNT (trinitrotoluène) (a), l'ammonal composé de nitrate d'ammonium, de poudre d'aluminium et de tolite)(b), le DNT (dinitrotoluène)(c), la dynamite gomme (d), le $C_{105}H_{417}N_{200}O_{374}$ (commercialisé sous le nom de gelamon 22 par Sprengstoffwerke Gnaschwitz GmbH) (e), l'hexogène (Cyclotriméthylène trinitramine) (f), le nitrate d'ammonium (g), le nitroglycol (h), la nitroglycérine (i), la nitropentrite (j), la poudre noire (k) sont bien distinguables des courbes des différents matériaux rencontrés classiquement dans des bagages comme l'aluminium (1), la cellulose (m), le Delrin (n) qui est un polyoxyméthylène (ou polyformaldéhyde) commercialisé par Du Pont, l'eau (o), le Kynar (p) qui est un PVDF (polyfluorure de vinylidène) commercialisé par Arkema, le nylon (q), la paraffine (r), le PEPT (s), le plexiglas (t), le polyéthylène (u), le polystyrène (v), le polyvinyle (w), le téflon (x) qui est un polytétrafluoroéthylène (PTFE) commercialisé par Du Pont.

Les courbes de la figure 2 ont été tracées en utilisant la formule (1') à partir des données tabulées par Hubbell. La grandeur S(x, 2) /$A_{norm}$ est donc porteuse d'une information traduisant la nature chimique du matériau étudié.

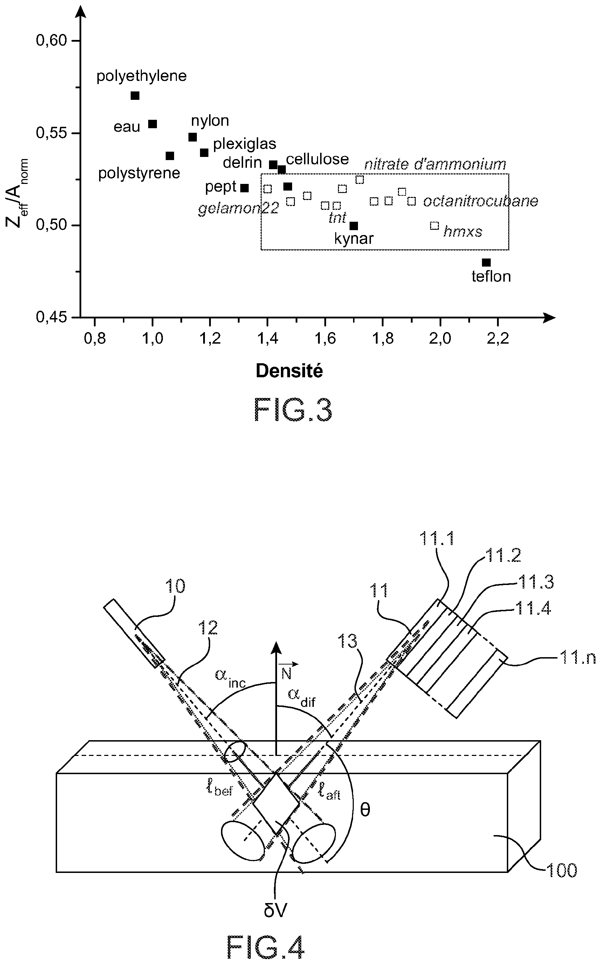

En représentant l'espace $2_{eff}/A_{norm}(\rho)$ comme sur la figure 3, on définit une zone caractéristique des explosifs pour des densités supérieures à 1,4 et une grandeur $Z_{eff}/A_{norm}$ comprise entre environ 0,48 et 0,53. Cette zone est encadrée.

Le procédé d'identification objet de l'invention permet d'estimer la densité ρ et en outre éventuellement la grandeur $Z_{eff}/A_{norm}$ ce qui permet de déterminer la nature chimique du matériau recherché.

Pour cela, on va utiliser une source de photons X destinée à produire un faisceau de photons X et un détecteur spectrométrique et réaliser des mesures multi-profondeur.

On se réfère à la figure 4 qui montre un dispositif permettant de mettre en oeuvre le procédé de l'invention. La source de photons X porte la référence 10, le détecteur spectrométrique porte la référence 11. On suppose que dans l'exemple décrit, l'objet 100 est composé d'un seul matériau homogène et se présente sous la forme d'un bloc sensiblement rectangulaire d'épaisseur connue. On verra plus loin que le procédé de l'invention peut aussi être employé si l'objet 100 comporte plusieurs matériaux en couches empilées au moins localement. Il suffit que l'objet ait une surface sensiblement plane au moins localement, cette surface devant être irradiée par les photons X émis par la source.

La source de photons X 10 et le détecteur spectrométrique 11 sont collimatés, l'angle de collimation est généralement faible, préférentiellement inférieur à environ 10° et plus particulièrement inférieur à 5°. La source de photons X 10 peut être monochromatique, par exemple une source isotopique, ou bien polychromatique, par exemple un tube générateur de rayons X. L'intensité des rayonnements produits par les tubes générateurs de rayons X étant supérieure à celle des rayonnements produits par les sources isotopiques, les tubes générateurs de rayons X sont préférés.

La source de photons X 10 est destinée à produire un faisceau de photons X incident 12 dont le spectre est une fonction de l'énergie $E_0$. Le faisceau de photons X incident 12 pénètre dans le matériau de l'objet 100, au niveau d'une zone sensiblement plane, et diffuse dans un volume d'inspection δV, situé à une profondeur donnée. Une atténuation se produit entre l'émission par la source de photons X 10 et le volume d'inspection δV. Un faisceau de photons X rétrodiffusé 13 est généré et il est capturé par le détecteur spectrométrique 11. Une atténuation se produit entre le volume d'inspection δV et le détecteur spectrométrique 11. Le volume d'inspection δV correspond à l'intersection entre le faisceau de photons X incident 12 et le faisceau de photons X rétrodiffusé 13 vers le détecteur spectrométrique 11. Du fait de la collimation de la source de photons X 10 et du détecteur spectrométrique 11, les faisceaux photons X incident et rétrodiffusé sont délimités spatialement, ce qui permet de définir un volume d'inspection δV relativement faible, typiquement de l'ordre du centimètre cube. Les angles de collimation de la source de photons X 10 et du détecteur spectrométrique 11 seront choisis en conséquence. Le faisceau de photons X incident 12 et le faisceau de photons X rétrodiffusé 13 sont séparés par un angle de diffusion θ, comme illustré sur la figure 4.

Le sommet de l'angle de diffusion θ est l'intersection entre l'axe central du faisceau de photons X incident 12 et le faisceau de photons X rétrodiffusé 13 vers le détecteur spectrométrique 11. Ces axes centraux sont représentés en pointillés sur la figure 4. L'angle de diffusion θ vaut 0° lorsque les deux axes centraux sont dans le prolongement l'un de l'autre.

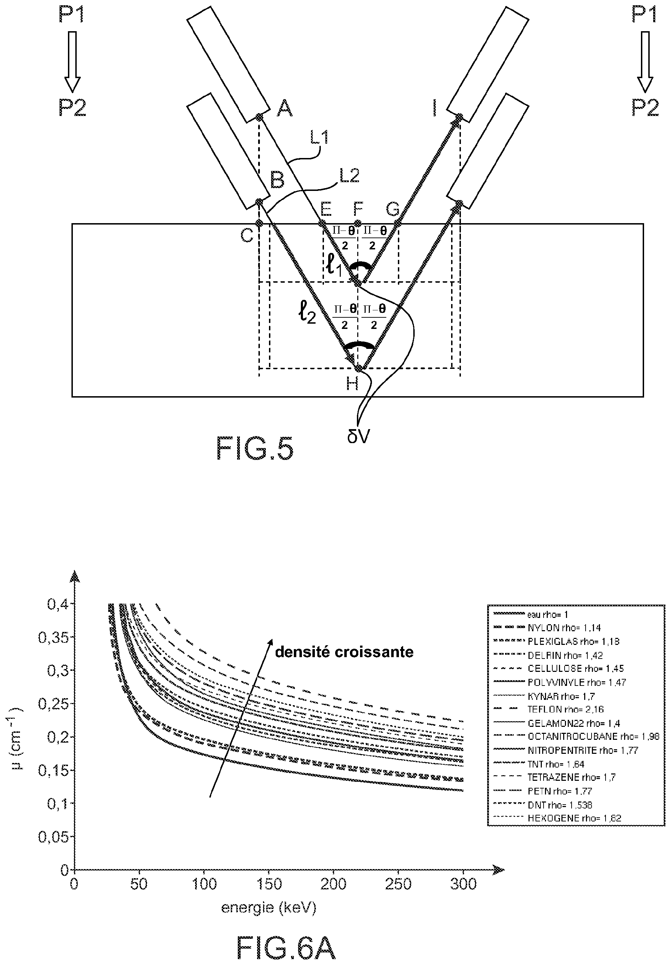

Comme on le verra plus loin, on fait au moins deux mesures consécutives d'une grandeur relative au rayonnement du faisceau de photons X rétrodiffusé 13 vers le détecteur spectrométrique 11. Pour cela, on déplace la source de photons X 10, le détecteur spectrométrique 11 et l'objet 100 relativement l'un par rapport à l'autre de manière à ce que la diffusion se fasse à des profondeurs différentes dans le matériau. Les deux positions ne sont illustrées que sur la figure 5 décrite ultérieurement. Le déplacement de la source de photons X 10 et du détecteur spectrométrique 11 entre les deux mesures consécutives sera réalisé en conservant le même angle de diffusion θ. Ce déplacement pourra par exemple se faire selon une direction sensiblement perpendiculaire à la surface de l'objet examiné, cette surface étant supposée sensiblement plane au moins localement.

Le faisceau de photons X incident 12 forme un angle $\alpha_{inc}$ avec une normale N à la surface irradiée de l'objet 100. Le faisceau de photons X rétrodiffusé 13 forme un angle $\alpha_{dif}$ avec la normale N à la surface irradiée de l'objet 100. Les angles $\alpha_{inc}$ et $\alpha_{dif}$ ne sont pas forcément égaux, par contre, préférentiellement, les angles $\alpha_{inc}$ et $\alpha_{dif}$ restent sensiblement constants lors des deux mesures consécutives.

Considérons le débit de fluence du faisceau de photons X incident. Ce débit de fluence est noté $F(E_0)$. Ce débit de fluence $F(E_0)$ est une des caractéristiques de la source de photons X 10. On rappelle que la fluence est le quotient d'un nombre de photons X émis ou détectés par unité de surface et le débit de fluence, la fluence par unité de temps. On note $X(E_1)$ le flux de photons X du faisceau de photons X rétrodiffusé 13 selon l'angle de diffusion θ vers le détecteur spectrométrique 11, ce flux de photons X étant mesuré par le détecteur spectrométrique 11. On rappelle que le flux correspond au nombre de photons X émis ou détectés par unité de temps.

Ce flux $X(E_1)$ s'exprime par :

$$X(E_1) = C(E_0, \theta).F(E_0).e^{-\mu_{matériau}(E_0, Z).\ell_{bef}} \left[ \frac{d\sigma_{Kn}(E_0, \theta)}{d\Omega} \delta\omega \frac{N_a.S(x, Z).\rho}{A_{norm}}.\delta V \right] e^{-\mu_{matériau}(E_1).\ell_{aft}}$$

$$(3)$$

où :

- $E_1 = \dfrac{E_0}{1 + \alpha(1 - \cos\theta)}$ est l'énergie des photons X détectés par le détecteur spectrométrique après la diffusion selon l'angle de diffusion θ et $\alpha = E_0/m_e c^2$, $m_e$ est la masse de l'électron au repos soit $9,1093097 \times 10^{-31}$ kg et c la célérité de la lumière dans le vide soit 299792458 m/s, les photons X du faisceau de photons X incident avant diffusion possédant l'énergie $E_0$ ;

- $C(E_0, \theta)$ est un coefficient d'efficacité, égal au rapport entre le flux de photons X mesuré par le détecteur spectrométrique à l'énergie $E_1$ sur le flux de photons X du faisceau de photons X rétrodiffusé arrivant au niveau du détecteur spectrométrique à la même énergie $E_1$, l'énergie $E_1$ dépendant de l'énergie $E_0$ comme on vient de le voir au paragraphe précédent ;

- $\mu_{matériau}(E_0)$ et $\mu_{matériau}(E_1)$ sont des coefficients d'atténuation linéaire du matériau avant et après la diffusion aux énergies respectives $E_0$ et $E_1$ ;

- $l_{bef}$ est la distance parcourue par le faisceau de photons X incident dans le matériau avant la diffusion ;

- $l_{aft}$ est la distance parcourue par le faisceau de photons X rétrodiffusé dans le matériau après la diffusion ;

- $\dfrac{d\sigma_{KN}(E_0, \theta)}{d\Omega}$ est la section efficace différentielle de diffusion par électron par effet Compton donnée par la formule de Klein-Nishina ;

- $\delta\omega$ est l'angle solide sous lequel est vu le détecteur spectrométrique depuis chaque point du volume d'inspection $\delta V$, cet angle solide n'est pas illustré pour ne pas surcharger la figure 4 ;

- $N_a$ est le nombre d'Avogadro ;

- $S(x, Z)$ est la fonction incohérente de diffusion Compton, elle tend vers $Z_{eff}$ comme on l'a vu précédemment.

Les autres paramètres ont déjà été présentés.

Dans la formule (3), trois paramètres dépendent du matériau à identifier, il s'agit de :

- p la densité du matériau qui est le terme qui différencie le plus deux matériaux différents.
- $\sigma(E)$ qui est le coefficient d'atténuation massique du matériau, il est généralement exprimé en cm²/g, ce paramètre est contenu dans les termes d'atténuation avant et après la diffusion à savoir :

$$e^{-\mu_{matériau}(E_0)l_{bef}} = e^{-\sigma(E_0)\rho l_{bef}}$$

et

$$e^{-\mu_{matériau}(E_1)l_{aft}} = e^{-\sigma(E_1)\rho l_{aft}}$$

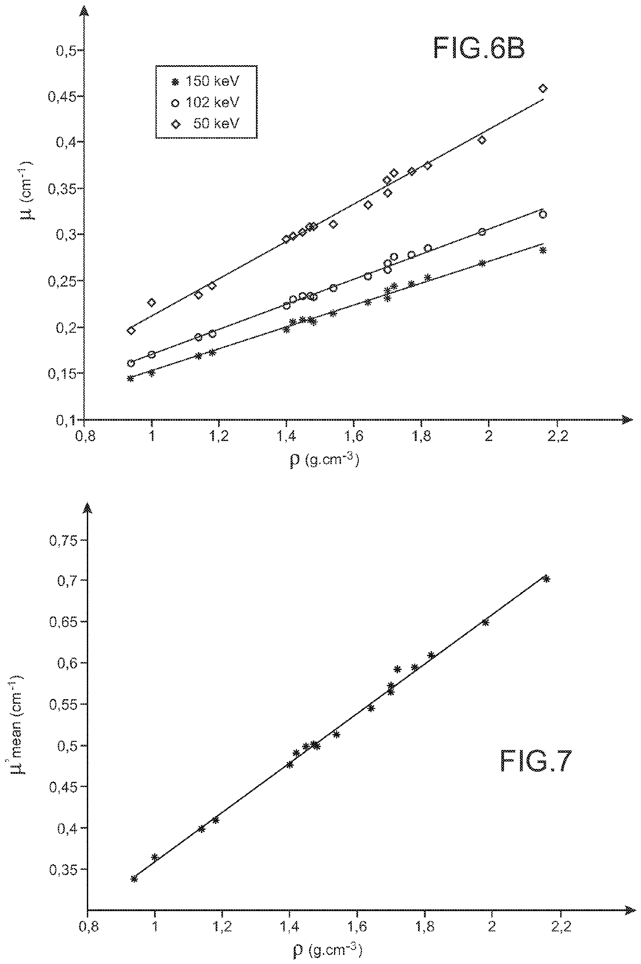

Pour les matériaux recherchés à base de carbone, d'oxygène, d'hydrogène, d'azote, de fluor etc..., $\sigma(E)$ présente une faible variation par rapport à celle de la densité $\rho$ à laquelle il est multiplié pour exprimer le coefficient d'atténuation linéaire $\mu(E)$. Ainsi, le coefficient d'atténuation linéaire $\mu(E)$ dépend très fortement de la densité du matériau comme l'illustre la figure 6B. En conséquence, le coefficient d'atténuation massique du matériau o(E) ne porte que peu d'information concernant la nature du matériau que l'on cherche à identifier. • S (x, Z) la fonction de diffusion incohérente qui est liée au nombre d'électrons qui diffusent par atome des éléments chimiques constituant le matériau à identifier.

La formule (3) est valable si les distances $l_{bef}$ et $l_{aft}$ séparant respectivement différents points du volume d'inspection $\delta V$ de la source de photons X 10 respectivement du détecteur spectrométrique 11 ne varient sensiblement pas. Cela signifie que les dimensions des côtés du volume $\delta V$ sont petites devant les distances $l_{bef}$ et $l_{aft}$.

Dans la formule (3), on note $k(E_0,\theta) = C(E_0,\theta).F(E_0)\left[\dfrac{d\sigma_{Kn}(E_0,\theta)}{d\Omega}\delta\omega N_a.\delta V\right]$. Le paramètre $k(E_0, \theta)$ ne dépend pas du matériau à identifier. Ce paramètre peut être calculé par simulation ou obtenu par mesure d'une grandeur relative au rayonnement du faisceau de photons X rétrodiffusé vers le détecteur spectrométrique, connaissance des caractéristiques expérimentales $\delta\omega, \theta, \delta V$ définies par le positionnement de l'ensemble source de photons X 10 - détecteur spectrométrique 11 par rapport à l'objet 100 et utilisation de la formule de Klein-Nishina. On s'aperçoit toutefois que ce paramètre $k(E_0, \theta)$ peut être difficilement estimé avec précision, notamment lors de l'utilisation d'une source de photons X non monoénergétique. Ainsi, selon un mode de réalisation de l'invention, on détermine $k(E_0, \theta)$ de manière expérimentale en utilisant un matériau connu dit étalon. Le détail de ce mode d'obtention du paramètre $k(E_0, \theta)$ sera précisé plus loin dans la description.

On note également :

$$\beta(E_1, Matériau, \theta) = \frac{S(x,Z).\rho}{A_{norm}}k(E_0,\theta) \approx \frac{Z_{eff}.\rho}{A_{norm}}k(E_0,\theta) ,$$

$\beta$ ($E_1$, Matériau, $\theta$) est un paramètre décrivant le phénomène de diffusion dans le matériau. La presque égalité n'est valable qu'au-delà d'une certaine énergie, notamment au-delà de quelques keV, comme on peut le voir sur la figure 2.

C'est la grandeur $\dfrac{Z_{eff}.\rho}{A_{norm}}$ que le procédé selon l'invention va permettre d'estimer.

$$X(E_1) = \beta(E_1, Matériau, \theta).e^{-\mu_{matériau}(E_0).\ell_{bef}-\mu_{matériau}(E_1).\ell_{aft}}$$

$$= \beta(E_1, Matériau, \theta).e^{-\mu_{matériau}(E_0).\ell_{vef}\left[1+\frac{\mu_{matériau}(E_1).\ell_{aft}}{\mu_{matériau}(E_0).\ell_{bef}}\right]}$$

$$= \beta(E_1, Matériau, \theta).e^{-\mu_{matériau}(E_0).\ell_{bef}\left[1+\frac{\mu_{matériau}(E_1)}{\mu_{matériau}(E_0)}\varepsilon\right]}$$

$$= \beta(E_1, Matériau, \theta).e^{-\mu'_{matériau}(E_0,E_1,\varepsilon).\ell_{bef}} \qquad (4)$$

avec

$$\mu'_{mat\acute{e}riau}(E_0, E_1, \varepsilon) = \mu_{mat\acute{e}riau}(E_0) \left[ 1 + \frac{\mu_{mat\acute{e}riau}(E_1)}{\mu_{mat\acute{e}riau}(E_0)} \varepsilon \right] \quad et \quad \varepsilon = \frac{\ell_{aft}}{\ell_{bef}}$$

$\mu'_{mat\acute{e}riau}(E_0, E_1, \varepsilon)$ est un coefficient appelé coefficient combiné d'atténuation du matériau, car il est établi selon une combinaison du coefficient d'atténuation linéaire du matériau aux énergies $E_0$ et $E_1$.

Comme on suppose que l'objet 100 inspecté possède une surface sensiblement plane au moins localement, c'est-à-dire au moins au niveau de l'intersection de l'objet avec le faisceau de photons X incident et le faisceau de photons X rétrodiffusé, le facteur $\varepsilon$ est constant pour n'importe quelle profondeur d'inspection et le coefficient combiné d'atténuation $\mu'$ est indépendant de la profondeur. Cette surface forme une frontière de l'objet 100 avec un milieu ambiant.

Pour estimer la grandeur $\dfrac{Z_{eff} \cdot \rho}{A_{norm}}$ recherchée, il faut donc connaître séparément le paramètre $\beta(E_1, \textit{Matériau}, \theta)$, le paramètre $k(E_0, \theta)$ ainsi que le coefficient combiné d'atténuation $\mu'_{mat\acute{e}riau}(E_0, E_1, \varepsilon)$. Pour cela, on réalise donc deux mesures successives du flux de photons X de faisceaux rétrodiffusés détecté par le détecteur spectrométrique 12, chacune des mesures se faisant à une profondeur d'inspection propre.

On appelle $X_1(E_1)$ le flux de photons X du faisceau de photons X rétrodiffusé 13 détecté par le détecteur spectrométrique 11 alors que l'ensemble source de photons X 10 et détecteur spectrométrique 11 est dans une première position d'inspection P1 et $X_2(E_1)$ le flux de photons X du faisceau de photons X rétrodiffusé 13 détecté par le détecteur spectrométrique 11 alors que l'ensemble source de photons X 10 et détecteur spectrométrique 11 est dans une seconde position d'inspection P2. Pour la première position d'inspection P1, la distance parcourue par le faisceau de photons X incident 12 dans le matériau jusqu'au volume d'inspection $\delta V$ est notée $l_1$ ou $l_{bef1}$ selon les endroits. Pour la seconde position d'inspection P2, la distance parcourue par le faisceau de photons X incident 12 dans le matériau jusqu'au volume d'inspection $\delta V$ est notée $l_2$ ou $l_{bef2}$ selon les endroits.

On peut se placer dans des conditions telles que $\varepsilon = l_{aft1}/l_{bef1} = l_{aft2}/l_{bef2}$ et donc que $\varepsilon = l_{aft1}/l_1 = l_{aft2}/l_2$. Il suffit notamment, pour réaliser les mesures de $X_1(E_1)$, $X_2(E_1)$ que $\alpha_{inc1} = \alpha_{inc2}$ et que $\alpha_{dif1} = \alpha_{dif2}$. Si ce n'est pas le cas, on résout le système d'équations en faisant l'hypothèse que les deux rapports précédents sont égaux. On obtient alors :

$$X_1(E_1) = \beta(E_1, \textit{Matériau}, \theta) . e^{-\mu'_{mat\acute{e}riau}(E_0, E_1, \varepsilon) . \ell_1} \tag{5}$$

$$X_2(E_1) = \beta(E_1, \textit{Matériau}, \theta) . e^{-\mu'_{mat\acute{e}riau}(E_0, E_1, \varepsilon) . \ell_2} \tag{6}$$

On calcule le rapport entre $X_1(E_1)$ et $X_2(E_1)$.

$$\frac{X_1(E_1)}{X_2(E_1)} = \frac{\beta(E_1, \textit{Matériau}, \theta) . e^{-\mu'_{mat\acute{e}riau}(E_0, E_1, \varepsilon) . \ell_1}}{\beta(E_1, \textit{Matériau}, \theta) . e^{-\mu'_{mat\acute{e}riau}(E_0, E_1, \varepsilon) . \ell_2}} \tag{7}$$

On pose $\Delta\ell = \ell_1 - \ell_2$

$$\ln\left(\frac{X_1(E_1)}{X_2(E_1)}\right) = \ln(e^{-\mu'_{mat\acute{e}riau}(E_0, E_1, \varepsilon) . \Delta\ell}) \tag{8}$$

$$\ln\left(\frac{X_1(E_1)}{X_2(E_1)}\right) = -\mu'_{mat\acute{e}riau}(E_0, E_1, \varepsilon) . \Delta\ell \tag{9}$$

$$\mu'_{matériau}(E_0, E_1, \varepsilon) = -\frac{1}{\Delta\ell}\ln\left(\frac{X_1(E_1)}{X_2(E_1)}\right) = -\frac{1}{\ell_1 - \ell_2}\ln\left(\frac{X_1(E_1)}{X_2(E_1)}\right) \tag{10}$$

$$\beta(E_1, Matériau, \theta) = \frac{X_1(E_1)}{e^{-\mu'_{matériau}(E_0, E_1, \varepsilon).\ell_1}} = \frac{X_1(E_1)}{e^{-\ell_1\left(-\frac{1}{(\ell_1-\ell_2)}\ln\frac{X_1(E_1)}{X_2(E_1)}\right)}}$$

$$= \frac{X_1(E_1)}{e^{\left(-\frac{\ell_1}{(\ell_1-\ell_2)}\ln\frac{X_1(E_1)}{X_2(E_1)}\right)}} = \frac{X_1(E_1)}{\left(\dfrac{X_1(E_1)}{X_2(E_1)}\right)^{\frac{\ell_1}{(\ell_1-\ell_2)}}}$$

$$= \frac{X_2(E_1)^{\frac{\ell_1}{(\ell_1-\ell_2)}}}{X_1(E_1)^{\frac{\ell_1}{(\ell_1-\ell_2)}-1}} = \frac{X_2(E_1)^{\frac{\ell_1}{(\ell_1-\ell_2)}}}{X_1(E_1)^{\frac{\ell_2}{(\ell_1-\ell_2)}}} \tag{11}$$

Pour chacune des positions de mesure, on place l'ensemble source de photons X 10-détecteur spectrométrique 11 par rapport à l'objet 100, de manière à connaître l'angle de diffusion $\theta$ et à le conserver sensiblement constant. On peut déterminer géométriquement $l_1$ et $l_2$ et par conséquent $\Delta l$, puis le coefficient combiné d'atténuation $\mu'_{matériau}(E_0, E_1, \varepsilon)$ avec les formules (10) et (11) et éventuellement le paramètre $\beta(E_1, Matériau, \theta)$. Les deux distances $l_1$ et $l_2$ peuvent être exprimées en se basant sur les positions relatives de la source de photons X 10, du détecteur spectrométrique 11 et de l'objet à inspecter 100. On utilise la distance AI séparant la source de photons X 10 du détecteur spectrométrique 11, les distances AC, BC séparant la source de photons X 10 de la surface de l'objet 100 irradiée par le faisceau de photons X incident 12, c'est-à-dire par laquelle le faisceau de photons X 12 incident pénètre dans l'objet 100, lorsque l'ensemble source de photons X 10-objet 100 est dans la première position P1 et dans la seconde position P2 respectivement. Les distances AI, AC, BC sont illustrées sur la figure 5.

On note :

$$\delta = \pi - \theta$$

$$\ell_1 = EF / \sin(\delta / 2)$$

Le point F est la projection du volume d'inspection $\delta V$ aussi bien à la première profondeur qu'à la seconde profondeur sur la surface de l'objet 100 irradiée par le faisceau de photons X incident 12.

$$EF = AI / 2 - CE = AI / 2 - ACtg(\delta / 2)$$

Le point E est le point de la surface de l'objet 100 irradiée par l'axe central du faisceau de photons X incident 12 dans la première position P1 de mesure.

$$\ell_1 = \left[AI / 2 - ACtg(\delta / 2)\right] / \sin(\delta / 2) = \frac{AI}{2\sin(\delta / 2)} - AC\frac{1}{\cos(\delta / 2)}$$

Le point D est le point de la surface de l'objet 100 irradiée par l'axe central du faisceau de photons X incident 12 dans la seconde position P2 de mesure.

$$\ell_2 = DF / \sin(\delta/2)$$

$$DF = AI/2 - CD = AI/2 - BC \cot g(\delta/2)$$

$$\ell_2 = \left[AI/2 - BCtg(\delta/2)\right]/\sin(\delta/2) = \frac{AI}{2\sin(\delta/2)} - BC\frac{1}{\cos(\delta/2)}$$

Connaissant $k(E_0, \theta)$ et sachant qu'il est indépendant du matériau à identifier, on peut en déduire le rapport $Z_{eff}\rho/A_{norm}$ tel que :

$$\frac{Z_{eff}\rho}{A_{norm}} = \left[\frac{X_2(E_1)^{\frac{\ell_1}{(\ell_1-\ell_2)}}}{X_1(E_1)^{\frac{\ell_2}{(\ell_1-\ell_2)}}}\right] / k(E_0,\theta) = \beta(E_1, Mat\acute{e}riau, \theta) / k(E_0,\theta) \qquad (12)$$

On va maintenant déterminer $k(E_0, \theta)$. Il peut être modélisé, mais avantageusement on le déterminera par mesure en utilisant un matériau étalon connu. Le matériau étalon étant connu, seul $k(E_0, \theta)$ est inconnu dans la formule (3). Il peut donc être aisément déterminé. Avec un matériau connu et une source de photons X dont on connait le flux de photons X du faisceau de photons X émis, en faisant deux mesures de flux de photons X du faisceau de photons X rétrodiffusé dans deux positions différentes de l'ensemble source de photons X détecteur spectrométrique, il est possible de déterminer :

$$\mathrm{X_{calib1}(E_1)} = \beta(E_1, Mat\acute{e}riau - \acute{e}talon, \theta).e^{-\mu'mat\acute{e}riau-\acute{e}talon(E_0,E_1,\varepsilon).l_1}$$

$$\mathrm{X_{calib2}(E_1)} = \beta(E_1, Mat\acute{e}riau - \acute{e}talon, \theta).e^{-\mu'mat\acute{e}riau-\acute{e}talon(E_0,E_1,\varepsilon).l_2}$$

$$\beta(E_1, Mat\acute{e}riau - \acute{e}talon, \theta) = \frac{S(x,Z).\rho}{A_{norm}}k(E_0,\theta) \approx \frac{Z_{eff}.\rho}{A_{norm}}k(E_0,\theta)$$

Les formules présentées ci-dessus sont valables pour des mesures dans le vide ou dans l'air ou de façon générale dans un gaz ou un mélange gazeux ou tout autre milieu faiblement absorbant aux énergies $E_0$, $E_1$, c'est-à-dire bien moins absorbant que le matériau connu.

Les matériaux explosifs qui nous intéressent ont des densités $\rho$ suffisamment différentes comme illustré sur la figure 3. On va maintenant expliquer comment estimer la densité $\rho$ du matériau à identifier puisque dans le procédé selon l'invention on commence par estimer cette densité $\rho$.

Pour des énergies suffisamment élevées, par exemple supérieures à environ 30 keV, on constate sur la figure 6A, que les coefficients d'atténuation linéaire $\mu$ dans les matériaux sont ordonnés dans le même sens que leurs densités $\rho$. Précisément, on constate même que le coefficient d'atténuation linéaire $\mu$ dépend linéairement de la densité du matériau comme l'illustre la figure 6B. Le coefficient combiné d'atténuation $\mu'$ est obtenu à partir d'une combinaison linéaire de coefficients d'atténuation linéaire $\mu$ du même matériau à deux énergies différentes $E_0$ et $E_1$.

$$\mu'_{mat\acute{e}riau}(E_0, E_1, \varepsilon) = \mu_{mat\acute{e}riau}(E_0).\left[1 + \frac{\mu_{mat\acute{e}riau}(E_1)}{\mu_{mat\acute{e}riau}(E_0)}.\varepsilon\right]$$

$$= \mu_{mat\acute{e}riau}(E_0) + \mu_{mat\acute{e}riau}(E_1).\varepsilon$$

On en déduit qu'une relation linéaire existe également entre $\mu'$ et la densité $\rho$ du matériau:
Les densités des matériaux représentés sur les figures 6A, 6B et 7 sont données ci-dessous.

| Matériau | Densité $\rho$ |
|---|---|
| eau | 1 |
| nylon | 1,14 |
| plexiglas | 1,18 |
| Delrin | 1,42 |
| cellulose | 1,45 |
| polyvinyle | 1,47 |
| Kynar | 1,7 |
| Téflon | 2,16 |
| Gelamon 22 | 1,4 |
| Octanitrocubane | 1,98 |
| nitropentrite | 1,77 |
| TNT | 1,64 |
| tétrazène | 1,7 |
| PETN | 1,77 |
| DNT | 1,538 |
| hexogène | 1,82 |

La figure 7 représente la correspondance entre la densité $\rho$ des matériaux et la moyenne du coefficient combiné d'atténuation $\mu'_{mean}$ pour des énergies $E_1$ comprises entre 50 et 100 keV dans un cas spécifique expérimental dans lequel $\varepsilon = 1$ et $\theta = 120°$.

Ce cas précis confirme la forte relation de linéarité entre la moyenne arithmétique du coefficient combiné d'atténuation $\mu'_{mean}$ calculée par des tables et la densité $\rho$. En pratique, l'angle de diffusion $\theta$ et le rapport $\varepsilon$ sont connus et dépendent de la géométrie du dispositif d'identification utilisé, on peut estimer m (m entier supérieur à un) coefficients combinés d'atténuation $\mu'(E_0, E_1, \varepsilon)$ pour une série de m valeurs de l'énergie $E_0$, de telle sorte que l'énergie $E_1$, dépendant de l'énergie $E_0$ et de l'angle de diffusion $\theta$ varie dans une plage d'énergie donnée, typiquement de quelques dizaines de keV, par exemple comprise entre 50 keV et 100 keV. En réalisant la moyenne arithmétique de ces m coefficients combinés d'atténuation, on obtient la moyenne arithmétique du coefficient combiné d'atténuation $\mu'_{mean}$ qui dépend de l'angle de diffusion $\theta$ et du rapport $\varepsilon$ connus.

On peut dresser une table de données obtenues de manière expérimentale pour un angle de diffusion $\theta$ et un rapport $\varepsilon$ donnés, cette table permettant d'établir une relation de type :

$$\mu'_{mean}(\theta, \varepsilon) = a\rho + b.$$

On peut donc obtenir une estimation de la densité $\rho$ du matériau à partir de cette relation. Les coefficients a et b peuvent également être obtenus par une phase de calibrage en réalisant des mesures avec un angle de diffusion $\theta$ et un rapport $\varepsilon$ donnés sur une pluralité d'objets de dimensions connues réalisés dans des matériaux dont on connait la densité.

La relation reliant la densité $\rho$ et la moyenne arithmétique du coefficient combiné d'atténuation $\mu'_{mean}$ est ici linéaire mais le calibrage peut montrer un autre type de relation, en général on a donc $\mu'_{mean} = f(\rho)$.

On utilisera un détecteur spectrométrique ayant un nombre de canaux suffisamment important pour recouvrir l'ensemble du signal utile de spectrométrie, par exemple correspondant à une bande d'énergie comprise entre quelques keV et 200 keV. On évitera les canaux correspondant aux plus basses énergies du spectre, ces derniers pouvant être perturbés par du bruit à ces énergies la linéarité entre la moyenne arithmétique du coefficient combiné d'atténuation $\mu'_{mean}$ et la densité $\rho$ est moins précise.

On peut alors estimer, à partir de la formule (12), $Z_{eff}/A_{norm}$ en fonction de $\beta(E1, Matériau, \theta)$ que l'on aura aussi calculé, $k(E_0)$ et $\rho$ et représenter $Z_{eff}/A_{norm}$ en fonction de $\rho$ comme sur la figure 3, ce qui permet d'identifier le matériau.

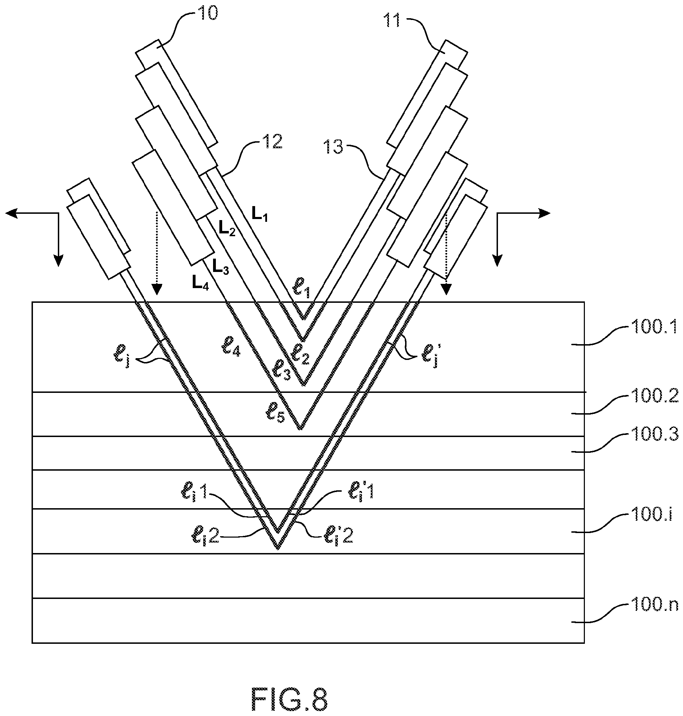

On va maintenant en se référant à la figure 8 expliquer comment, selon le procédé de l'invention, identifier, dans un objet, un matériau qui est enterré sous une ou plusieurs couches d'autres matériaux. On suppose que chacune des couches de l'objet est dans un matériau homogène, au moins dans la zone où se propage le faisceau de photons X incident 12 et le faisceau de photons X rétrodiffusé 13. On suppose que l'objet 100 est formé de n couches empilées référencées 100.1, 100.2, 100.3, .................. . . 100.i, .............100.n, n est un entier supérieur ou égal à 1. Les couches ont un rang croissant plus on s'éloigne de la surface qui est irradiée par le faisceau de photons X incident 12.

Il va falloir faire au moins deux mesures du flux de photons X du faisceau de photons X rétrodiffusé vers le détecteur spectrométrique par couches, pour deux profondeurs de diffusion différentes.

Dans la couche de rang i (i supérieur ou égal à 2) on mesure donc deux flux de photons X $X_{i1}(E_1)$ et $Xi_2(E_1)$ de faisceaux de photons X rétrodiffusés selon un même angle $\theta$ de rétrodiffusion à partir de volumes d'inspection $\delta V$ situés à des profondeurs de diffusion différentes. Ces flux de photons X s'expriment de la manière suivante :

$$X_{i1}(E_1) = \beta(E_1, \text{Matériau}.i, \theta).e^{-\mu'\text{matériau}.i(E_0,E_1,\varepsilon).li1}.Fi \qquad (13)$$

$$X_{i2}(E_1) = \beta(E_1, \text{Matériau}.i, \theta).e^{-\mu'\text{matériau}.i(E_0,E_1,\varepsilon).li2}.Fi \qquad (14)$$

li1 et li2 sont les distances parcourues par le faisceau de photons X 12 incident dans le matériau de la couche 100.i, jusqu'au volume d'inspection.

Le coefficient d'atténuation linéaire peut être donné par :

$$\mu'_{\text{matériau}.i}(E_0, E_1, \varepsilon) = -\frac{1}{\ell i1 - \ell i2} ln\left(\frac{X_1(E_1)}{X_2(E_1)}\right)$$

On appelle li'1, li'2 les distances parcourues par le faisceau de photons X rétrodiffusé dans la couche 100.1 depuis le volume d'inspection. Dans une même couche 100.i de matériau, le coefficient combiné d'atténuation $\mu'$matériau.i$(E_0, E_1, \varepsilon)$ reste constant. Ici, le rapport $\varepsilon$ est tel que $\varepsilon = $ li'1/li1 = li'2/li2.

On peut résoudre le système d'équations (13), (14) pour trouver le paramètre $\beta$(E1, Matériau, $\theta$). Le paramètre s'exprime par :

$$\beta(E_1, \text{Matériau}.i, \theta) = \frac{Xi2(E_1)^{\frac{\ell i1}{(\ell i1 - \ell i2)}}}{Xi1(E_1)^{\frac{\ell i2}{(\ell i1 - \ell i2)}}}$$

On calcule li1, li2, li'1, li'2 à partir des positions relatives de la source de photons X, du détecteur spectrométrique et de l'objet, de la distance lj parcourue par le faisceau de photons X 12 incident dans chacun des uns ou plusieurs matériaux de rang 1 à i-1, de la distance lj' parcourue par le faisceau de photons X 13 rétrodiffusé dans chacun des ou plusieurs matériaux de rang 1 à i-1. Pour cela, on effectue des mesures successives de flux de photons X de faisceaux rétrodiffusés pour des volumes d'inspection $\delta V$ situés de plus en plus profond, à partir de la couche de surface et espacés d'un pas p, l'angle de diffusion $\theta$ restant sensiblement constant d'une mesure à l'autre. On choisit le pas p, de préférence petit par rapport à l'épaisseur des i-1 couches. On calcule pour un premier flux $X_1(E_1)$, un second flux $X_2(E_1)$ et un troisième flux $X_3(E_1)$ successifs un premier coefficient combiné d'atténuation

$$\mu'_1(E_0, E_1, \varepsilon) = -\frac{1}{lj1 - lj2} ln\left(\frac{X_1(E_1)}{X_2(E_1)}\right)$$ et un second coefficient combiné d'atténuation

$$\mu'_2(E_0, E_1, \varepsilon) = -\frac{1}{lj2 - lj3} ln\left(\frac{X_2(E_1)}{X_3(E_1)}\right)$$, avec $\varepsilon$=lj'1/lj1 = lj'2/lj2 = lj'3/lj3, lj1, lj2, lj3 étant les distances parcourues par le faisceau de photons X 12 incident dans le matériau dans lequel se trouve le volume d'inspection pour lequel la mesure est effectuée, lj'1, lj'2, lj'3 étant les distances parcourues par le faisceau de photons X 13 rétrodiffusé dans le matériau dans lequel se trouve le volume d'inspection pour lequel la mesure est effectuée. Ces distances sont calculées à partir de la position relative entre la source de photons X 10, le détecteur spectrométrique 11 et l'objet 100, et du pas p. On compare le premier et le second coefficient combiné d'atténuation et dès qu'une différence apparaît, on attribue à la distance lj recherchée la plus grande des distances utilisées dans la formule du premier coefficient combiné d'atténuation. Dès que le premier coefficient combiné d'atténuation est très différent du second coefficient combiné d'atténuation, cela signifie que l'on vient de passer d'une couche donnée à la suivante qui est dans un autre matériau.

Les distances lj, lj' permettent d'estimer la profondeur Pj de la frontière séparant deux matériaux différents connaissant l'angle d'incidence du faisceau de photons X incident par rapport à la surface du matériau, la dite surface étant considérée comme plane au moins localement, c'est-à-dire entre la zone d'impact du faisceau de photons X incident et la zone traversée par le faisceau de photons X rétrodiffusé selon l'angle θ.

En effet, à partir de la distance lj, il est possible de connaître la profondeur Pj de l'interface entre une couche de matériau de rang j et une couche de matériau de rang j+1 en connaissant l'angle d'incidence $\alpha_{inc}$ du faisceau de photons X incident par rapport à une normale N de la face d'entrée de la première couche 100.1 du matériau analysé, selon l'égalité Pj = lj × sin($\alpha_{inc}$). La normale N est dirigée vers l'extérieur du matériau.

De même, connaissant lj', il est possible d'estimer la profondeur Pj en connaissant l'angle $\alpha_{dif}$ du faisceau de photons X rétrodiffusé par rapport à cette la normale N précédemment citée selon l'égalité

$$\mathrm{Pj} \;=\; \mathrm{lj'} \;\times\; \cos(\alpha_{dif}).$$

On suppose que la surface d'entrée de la première couche 100.1 du matériau analysé est localement plane entre la zone d'impact du faisceau de photons X incident et la zone traversée par le faisceau de photons X rétrodiffusé selon l'angle θ. On remarquera d'ailleurs que θ = $\alpha_{inc}$ + $\alpha_{dif}$.

On réitère les étapes de calcul, de comparaison et d'attribution une ou plusieurs fois en prenant trois flux de photons X successifs, deux d'entre eux successifs étant des flux utilisés pour le calcul de l'étape de calcul précédente. Le calcul des distances parcourues par le faisceau de photons X dans le matériau dans lequel se trouve le volume d'inspection pour lequel la mesure est effectuée prend en compte la distance lj calculée précédemment.

On pourrait également faire le même raisonnement en déterminant le coefficient β(E$_1$, matériau.i, θ) avec deux des mesures successives puis avec les deux autres mesures successives. Une variation du coefficient β(E$_1$, matériau.i, θ) signale un changement de matériau.

En connaissant l'angle d'incidence du faisceau de photons X incident par rapport à la surface de l'objet observé, il est possible, connaissant la distance lj parcourue par le faisceau de photons X incident avant la rétrodiffusion dans la couche j, de déterminer la profondeur de la frontière entre la couche i et la couche j par rapport à la surface de l'objet en utilisant des relations trigonométriques simples.

Il faut aussi déterminer le facteur d'atténuation Fi, cette atténuation dépend des matériaux des i-1 couches 100.1 à 100.i-1, traversées par le faisceau de photons X incident et le faisceau de photons X rétrodiffusé et recouvrant la couche i.

$$Fi = \prod_{j=1}^{i-1} e^{-\mu'_{mat\acute{e}riau,j}(E_0,E_1,\varepsilon)\cdot \ell j} \qquad\qquad (15)$$

avec ε=lj'/lj lj correspond à la distance parcourue par le faisceau de photons X incident dans la couche j et lj' correspondant à la distance parcourue par le faisceau de photons X rétrodiffusé dans la couche j.

Pour chacune des i-1 couches, on doit donc calculer le coefficient combiné d'atténuation μ'$_{matériau.j}$(E$_0$, E$_1$, ε) grâce à deux mesures de flux X$_{j1}$(E$_1$), X$_{j2}$(E$_1$) à des profondeurs différentes en utilisant la formule suivante :

$$\mu'_{mat\acute{e}riau.k}(E_0,E_1,\varepsilon) = (1/l1j - l2j)\ln(X_{j1}(E_1)/X_{j2}(E_1))$$

ε=l1'j/l1j=l2'j/l2j, l1j et l2j sont les distances parcourues par le faisceau de photons X incident dans le matériau de la couche j jusqu'au volume d'inspection correspondant à la mesure considérée, l1'j et l2'j sont les distances parcourues par le faisceau de photons X rétrodiffusé dans le matériau de la couche j jusqu'au volume d'inspection correspondant à la mesure considérée.

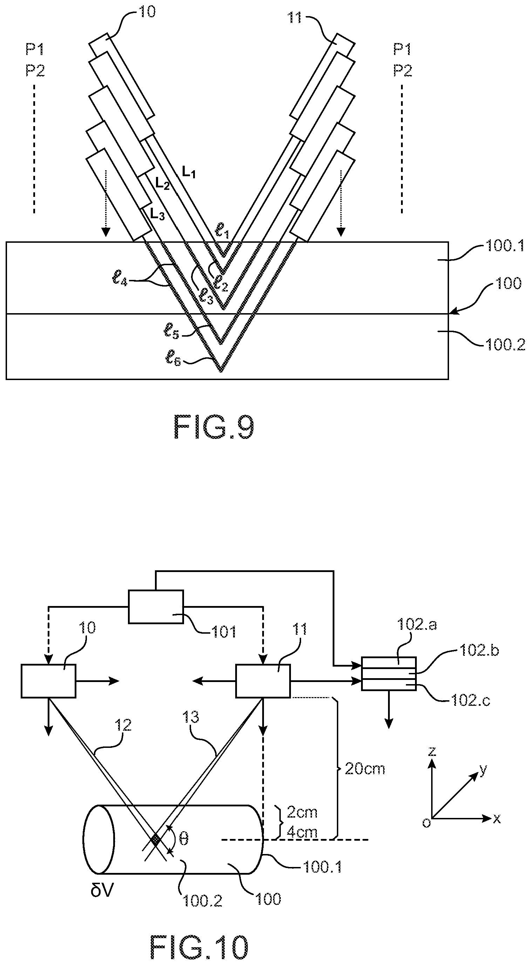

Maintenant que l'on a généralisé, on va détailler les calculs pour un objet 100 possédant deux couches empilées 100.1 et 100.2, la première superficielle réalisée dans un matériau.1, la seconde enterrée réalisée dans un matériau.2. On se réfère à la figure 9. On suppose que l'objet 100 ne comporte que deux couches homogènes empilées 100.1, 100.2.

On réalise trois mesures du flux de photons X de faisceaux de photons X rétrodiffusés, selon l'angle de diffusion

$\theta$, à trois profondeurs différentes dans la couche 100.1 superficielle et deux dans la couche 100.2 enterrée.

Ces mesures s'expriment de la manière suivante :

$$
\left.
\begin{aligned}
X_1(E_1) &= \beta(E_1, Mat\acute{e}riau.1, \theta).e^{-\mu'_{mat\acute{e}riau.1}(E_0, E_1, \varepsilon).\ell_1} \\
X_2(E_1) &= \beta(E_1, Mat\acute{e}riau.1, \theta).e^{-\mu'_{mat\acute{e}riau.1}(E_0, E_1, \varepsilon).\ell_2} \\
X_3(E_1) &= \beta(E_1, Mat\acute{e}riau.1, \theta).e^{-\mu'_{mat\acute{e}riau.1}(E_0, E_1, \varepsilon).\ell_3}
\end{aligned}
\right\} \quad (16)
$$

$$
\left.
\begin{aligned}
X_4(E_1) &= \beta(E_1, Mat\acute{e}riau.2, \theta).e^{-\mu'_{mat\acute{e}riau.1}(E_0, E_1, \varepsilon).\ell_4} e^{-\mu'_{mat\acute{e}riau.2}(E_0, E_1, \varepsilon).\ell_5} \\
X_5(E_1) &= \beta(E_1, Mat\acute{e}riau.2, \theta).e^{-\mu'_{mat\acute{e}riau.1}(E_0, E_1, \varepsilon).\ell_5} e^{-\mu'_{mat\acute{e}riau.2}(E_0, E_1, \varepsilon).\ell_6}
\end{aligned}
\right\} \quad (17)
$$

Le rapport $\varepsilon$ correspond toujours au rapport de la distance parcourue par le faisceau de photons X rétrodiffusé sur la distance parcourue par le faisceau de photons X incident dans le matériau.

La combinaison de $X_1(E_1)$ et de $X_2(E_1)$ permet de calculer le paramètre $\beta(E_1, Mat\acute{e}riau.1, \theta)$ et le coefficient combiné d'atténuation $\mu'_{mat\acute{e}riau.1}(E_0, E_1, \varepsilon)$ de la manière suivante :

$$
\beta(E_1, Mat\acute{e}riau.1, \theta) = \left( \frac{X_2(E_1)^{\frac{\ell_1}{(\ell_1 - \ell_2)}}}{X_1(E_1)^{\frac{\ell_2}{(\ell_1 - \ell_2)}}} \right)
$$

$$
\mu'_{mat\acute{e}riau.1}(E_0, E_1, \varepsilon) = -\frac{1}{\ell_1 - \ell_2} \left( \ln\left( \frac{X_1(E_1)}{X_2(E_1)} \right) \right)
$$

En introduisant le coefficient combiné d'atténuation $\mu'_{mat\acute{e}riau.1}(E_0, E_1, \varepsilon)$, dans les formules des flux (17), on obtient le coefficient combiné d'atténuation $\mu'_{mat\acute{e}riau.2}(E_0, E_1, \varepsilon)$ et le paramètre $\beta(E_1, Mat\acute{e}riau.2, \theta)$.

$$
\Rightarrow \mu'_{mat\acute{e}riau.2}(E_0, E_1, \varepsilon) = -\frac{1}{\ell_5 - \ell_6} \left( \ln\left( \frac{X_4(E_1)}{X_5(E_1)} \right) \right)
$$

$$
\Rightarrow \beta(E_1, Mat\acute{e}riau.2, \theta) = \frac{X_4(E_1)}{e^{-\mu'_{mat\acute{e}riau.1}(E_0, E_1, \varepsilon).\ell_4} e^{-\mu'_{mat\acute{e}riau.2}(E_0, E_1, \varepsilon).\ell_5}}
$$

Il ne reste plus qu'à estimer la densité $\rho$ avec la moyenne du coefficient combiné d'atténuation $\mu'_{mean}$. Avec les grandeurs ci-dessus, on peut estimer le rapport Zeff/Anorm=$\beta(E_1, Mat\acute{e}riau.2, \theta)/k(E_0, \theta).\rho$ pour pouvoir représenter Zeff/Anorm en fonction de $\rho$ comme sur la figure 3.

On va maintenant donner un exemple d'identification du matériau d'un objet par le procédé selon l'invention. On utilise un récipient 100.1 cylindrique en PETP $(C_{10})H_8O_4)$ dont la densité $\rho$ vaut 1,32. Le récipient 100.1 a un rayon de 4 cm, une longueur de 32 cm et une épaisseur de 1 mm.

On va remplir ce récipient 100.1 d'un matériau 100.2 que l'on cherche à identifier par le procédé de l'invention. On se réfère à la figure 10. L'objet référencé 100 correspond au récipient 100.1 contenant le matériau 100.2.

On dispose de deux groupes de matériaux. Le premier groupe de matériaux solides comprend : l'acide picrique*, l'ammonal*, le camphre*, la cellulose, le Delrin, le DNT*, la dynamite gomme*, le gelamon 22*, l'hexogène*, l'HMX $(C_4H_8N_8O_8$ ou High Melting-Point Explosive)*, le Kynar, le nitrate d'ammonium*, le nitropentrite*, le nylon, le nitroglycol*, l'octanitrocubane*, la paraffine, la pentrite ou Pentaéythritol Tétranitrate ou PETN*, le PETP, le plexiglas, le polyéthylène, le polystyrène, le polyvinyle, la poudre noire*, le Téflon, le tétrazène*, le TNT*.

Le second groupe comprend cinq matériaux liquides comme l'eau, le péroxyde d'hydrogène, la nitroglycérine*, l'acétone, le péroxyde d'acétone. Les matériaux suivis d'une « * » sont des explosifs.

On a utilisé une source de photons X 10 de type XRS-3 fournissant un faisceau de photons X d'énergie maximale de 270 kV, en impulsions avec 20 impulsions par minute. Le détecteur spectrométrique 11 est un détecteur en tellure de cadmium.

La source de photons X 10 et le détecteur spectrométrique 11 sont placés dans un plan xoy se trouvant à une distance d'environ 20 cm du volume d'inspection $\delta V$. Ils sont à la même distance de la surface de l'objet 100. Ce plan xoy est parallèle à une génératrice du cylindre formant l'objet 100. Lors d'une des mesures du flux de photons X du faisceau de photons X rétrodiffusé par le détecteur spectrométrique 11, le volume d'inspection $\delta V$ se trouve à une profondeur de 2cm dans le récipient 100.1. Lors de l'autre mesure, il se trouve à une profondeur de 4 cm. Le volume d'inspection $\delta V$ se trouve dans le matériau 100.2. L'angle de diffusion $\theta$ vaut 120°. Le détecteur spectrométrique 11 et la source de photons X 10 sont collimatés, ils ont une ouverture de 2,4°. On prévoit des moyens réglage 101 de la position relative entre la source de photons X 10, le détecteur spectrométrique 11 et l'objet 100 de manière à placer le volume d'inspection $\delta V$ dans au moins deux positions à des profondeurs différentes dans le matériau 100.2 tout en conservant l'angle de diffusion sensiblement constant. Les moyens de réglage 101 rapprochent et/ou éloignent l'ensemble source de photons X-détecteur spectrométrique par rapport à l'objet et rapprochent et/ou éloignent la source de photons X du détecteur spectrométrique. Les déplacements, par exemple de l'ensemble source de photons X 10-détecteur spectrométrique 11 se font selon la direction z. On peut aussi déplacer la source de photons 10 et/ou le détecteur spectrométrique selon la direction x. La génératrice du cylindre est dirigée selon x. Les moyens de réglage 101 permettent d'ajuster l'angle de diffusion $\theta$ d'une part et la distance entre l'ensemble source de photons X-détecteur spectrométrique. Le réglage peut se faire pas à pas. Le pas peut être constant ou non. On choisira avantageusement le pas inférieur à l'épaisseur d'une couche de matériau de l'objet de manière à ce que le volume d'inspection puisse prendre au moins deux positions dans la couche de matériau. Si on cherche à trouver l'épaisseur d'une couche de matériau, le pas sera encore plus petit afin de faire plus de deux mesures de flux de photons X dans une même couche.

On prévoit des moyens de traitement et de calcul 102.a pour traiter les flux de photons X mesurés par le détecteur spectrométrique dans les deux positions et pour calculer le coefficient d'atténuation combiné $\mu'_{matériau}(E_0, E_1, \varepsilon)$ à l'aide des flux de photons X mesurés dans les deux positions.

Les moyens de traitement et de calcul 102.a peuvent également calculer le paramètre $\beta(E_1, \textit{Matériau}, \theta)$ à l'aide des flux de photons X mesurés dans les deux positions.

On prévoit aussi des moyens d'estimation 102.b de la densité $\rho$ du matériau à partir d'une moyenne $\mu'_{mean}$ du coefficient d'atténuation combiné $\mu'_{matériau}(E_0, E_1, \varepsilon)$ sur une plage d'énergie donnée des photons X du faisceau de photons X rétrodiffusé. Cette moyenne $\mu_{mean}$ est représentative de la densité $\rho$ du matériau.

Il y a également des moyens de détermination 102.c de la nature chimique du matériau à l'aide du paramètre $\beta(E_1, \text{Matériau}, \theta)$ décrivant le phénomène de diffusion, du coefficient d'atténuation combiné $\mu'_{matériau}(E_0, E_1, \varepsilon)$ et de la densité $\rho$.

Ces moyens de traitement et de calcul 102.a reçoivent les signaux acquis par le détecteur spectrométrique 11 et les grandeurs géométriques reliant la source de photons X 10 au détecteur spectrométrique 11 et à l'objet 100. La connaissance de $\mu'$, $\rho$, $\beta$ permet d'identifier la nature chimique du matériau examiné. Les moyens d'estimation 102.b et les moyens de détermination 102.c reçoivent les signaux acquis par le détecteur spectrométrique 11 et les grandeurs géométriques reliant la source de photons X 10 au détecteur spectrométrique 11 et à l'objet 100, ainsi que les signaux délivrés par les moyens de traitement et de calcul 102.a.

Les moyens de détermination 102.c peuvent utiliser la variation du rapport $\beta(E_1, \textit{Matériau}, \theta)/(k(E_0, \theta)\rho$ en fonction de la densité, et notamment fournir un graphique représentant $\beta(E_1, \textit{Matériau}, \theta)/\rho.k(E_0, \theta)$ en fonction de la densité $\rho$ comme sur la figure 3 et/ou les trois fonctions $\mu'$ $\beta$, $\rho$.

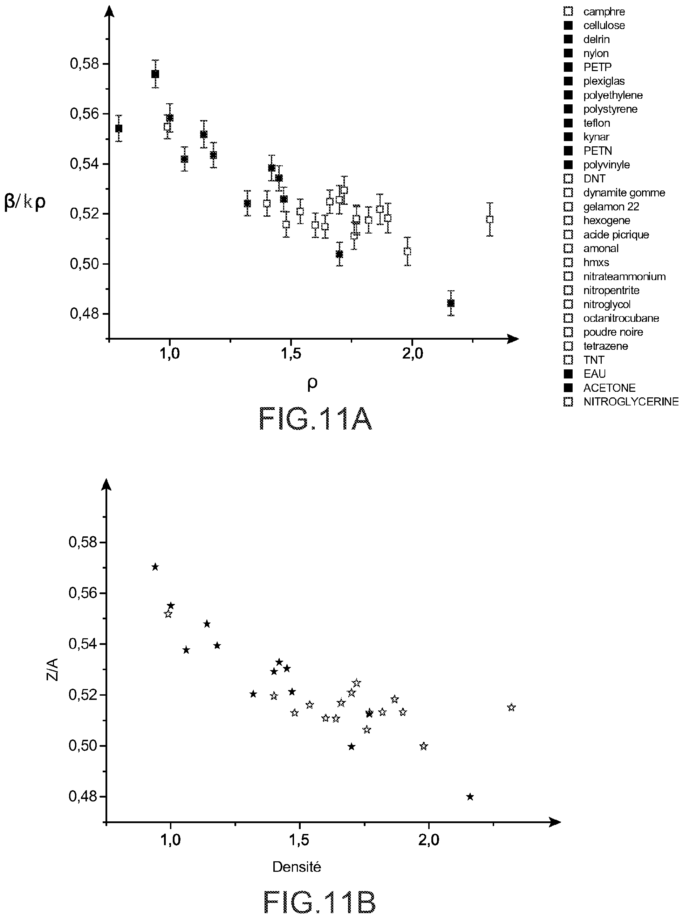

Les résultats des calculs obtenus par le procédé selon l'invention sont illustrés sur la figure 11A qui représente la variation du rapport $\beta(E_1, \textit{Matériau}, \theta)/\rho.k(E_0, \theta)$ en fonction de la densité $\rho$. Sur la figure 11B, on a représenté, pour les mêmes matériaux, la variation du rapport $Z_{eff}/A_{norm}$ théorique en fonction de la densité $\rho$. Dans ces deux représentations la densité $\rho$ est la densité théorique.

On s'aperçoit que la présence du récipient n'a pas d'influence sur la détermination du matériau qu'il contient. La répartition des valeurs est sensiblement la même sur la figure 11A et sur la figure 11B.

Sur ces figures 11A, 11B, on peut distinguer nettement sur la moitié droite du graphique une zone d'explosifs. Plusieurs configurations ont été employées pour la position de l'ensemble source de photons X détecteur par rapport à l'objet. Les meilleurs résultats en termes de précision ont été obtenus avec la distance de 20 cm et l'ouverture de 2,4° comme indiqué plus haut. Un plus grand espacement et une ouverture plus grande ne donnaient pas d'aussi bons résultats.

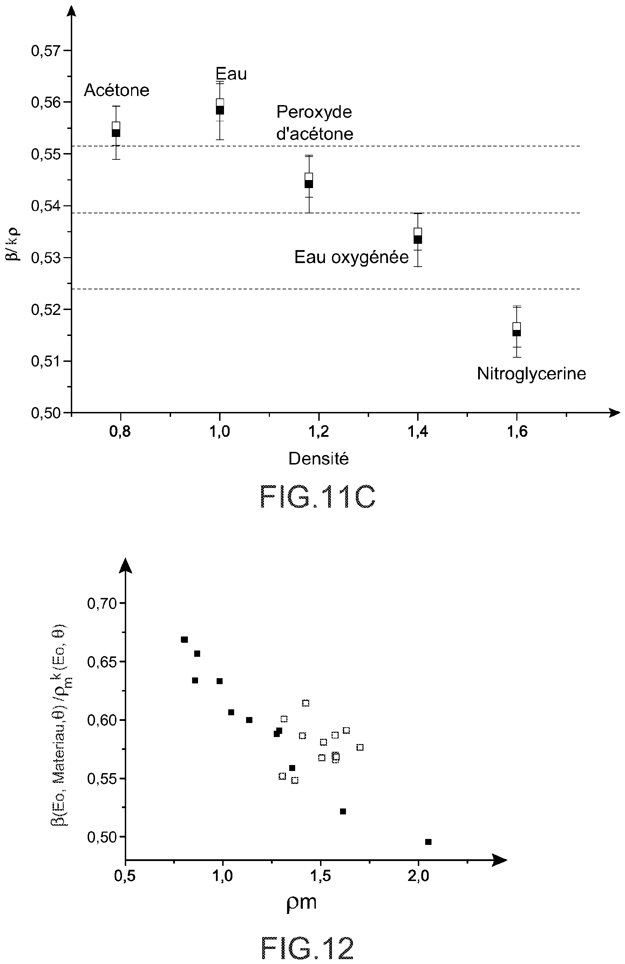

Sur la figure 11C, pour les cinq liquides du second groupe, on a représenté la variation du rapport $\beta(E_1, \textit{Matériau}, \theta)/\rho.k(E_0, \theta)$ en fonction de la densité $\rho$ à partir de mesures de la grandeur relative au rayonnement. On a effectué deux séries de mesures avec des collimations différentes pour l'ensemble source de photons X - détecteur spectrométrique. L'ouverture de la source de photons X et celle du détecteur spectrométrique ont été de 1,2° et de 1,5° ce qui a fait passer le volume d'inspection de 0,65 cm$^3$ à 1,43 cm$^3$. Les points pleins correspondent à l'ouverture de 1,2° et les points vides à l'ouverture de 1,5°.

Sur les figures 11A, 11B, 11C, les valeurs indiquées sont des moyennes pondérées représentées avec des barres d'erreurs suite à une étude statistique sur 100 réalisations. On s'aperçoit que les liquides peuvent être distingués des solides, leur densité étant moindre.

Dans les mêmes conditions de simulation que celles exposées plus haut et ayant conduit aux représentations des figures 11A et 11B, on a calculé la densité estimée pm à partir de l'énergie moyenne comme on l'a expliqué à partir de l'expression (13).

Sur la figure 12, on a représenté la variation du rapport $\beta(E_1, \textit{Matériau}, \theta)/\rho m.(k(E_0, \theta)$ en fonction de pm pour tous les matériaux testés a la figure 11A et dans les mêmes conditions géométriques. Cette représentation est en bon accord avec celle de la figure 11A.

L'exploitation des informations apportées par le faisceau de photons X rétrodiffusé en s'appuyant sur les performances du détecteur spectrométrique est utile pour notamment:

- l'identification de la nature d'un liquide
- la distinction de l'eau par apport à un explosif liquide sachant qu'un explosif peut être un mélange à base de produits courants comme l'eau oxygénée, l'acétone, les engrais, etc. ou un explosif liquide comme la nitroglycérine et le peroxyde d'acétone.

Bien qu'un certain mode de réalisation de la présente invention ait été représenté et décrit de façon détaillée, on comprendra que différents changements et modifications puissent être apportés sans sortir du cadre de l'invention. On peut notamment envisager que l'objet à inspecter ne soit pas dans sa globalité en couches empilées, mais que cet empilement ne se trouve que dans une zone d'inspection parcourue par les faisceaux de photons X incident et rétrodiffusé.

Le dispositif permettant de mettre en oeuvre le procédé précédemment décrit peut être une source de photons X, comme un générateur de rayons X collimaté et un détecteur spectrométrique collimaté, l'un et l'autre étant déplacés entre deux mesures consécutives de telle sorte que l'axe de collimation du détecteur soit centré sur le même angle de diffusion $\theta$ par rapport au rayonnement produit par la source. Les flèches sur la figure 8 illustrent les directions de déplacement possibles.

Selon une autre disposition, la source de photons X est fixe, et le détecteur est déplacé de telle sorte qu'entre deux mesures consécutives, l'axe de collimation soit orienté selon le même angle de diffusion $\theta$ par rapport au rayonnement produit par la source.

Selon une autre disposition illustrée sur la figure 4, la source de photons X 10 peut être fixe, le détecteur 11 étant formé d'un arrangement de détecteurs élémentaires 11.1, 11.2, ..., 11.n collimatés, les axes de collimation étant de préférence parallèles et orientés selon un même angle de diffusion $\theta$ par rapport au rayonnement produit par la source. Il est alors possible de comparer au moins deux mesures du rayonnement rétrodiffusé mesurées par au moins deux détecteurs différents.

## Revendications

1. Procédé d'identification d'un matériau d'un objet, ce matériau étant pourvu d'un rang i (i entier), i valant un s'il est en surface et étant supérieur à un s'il est enterré sous i-1 couches, dans lequel :

   a°) on irradie une surface sensiblement plane au moins localement de l'objet (100) avec un faisceau de photons X incident (12) généré par une source (10) de photons X collimatée ; **caractérisé en ce qu'**

   b°) on mesure à l'aide d'un détecteur spectrométrique (11) collimaté un premier flux de photons X ($Xi1(E_1)$) d'un faisceau de photons X rétrodiffusé (13) à une énergie E1 selon un angle de diffusion ($\theta$) donné, généré après diffusion du faisceau de photons X incident dans un premier volume d'inspection du matériau de rang i, se trouvant à une première profondeur dans le matériau de rang i ;

   c°) on mesure à l'aide du détecteur spectrométrique collimaté un second flux de photons X ($Xi2(E_1)$) d'un faisceau de photons X rétrodiffusé à ladite énergie $E_1$ selon le même angle de diffusion donné, généré après diffusion du faisceau de photons X incident dans un second volume d'inspection du matériau de rang i, se trouvant à une seconde profondeur dans le matériau de rang i, la seconde profondeur étant différente de la première profondeur;

   d°) on calcule à l'aide des mesures des deux flux de photons X ($Xi1(E_1)$, $Xi2(E_1)$), un coefficient combiné d'atténuation $\mu'_{matériau.i}(E_0, E_1, \varepsilon)$ dans lequel $E_0$ est l'énergie des photons X du faisceau de photons X incident et $E_1$ l'énergie des photons X du faisceau de photons X rétrodiffusé selon l'angle de diffusion donné, comprenant un logarithme népérien du rapport entre les deux flux ($Xi1(E_1)$, $Xi2(E_1)$),

   $\varepsilon$ est un rapport tel que $\varepsilon = li'1/li1 = li'2/li2$, li1 respectivement li2 étant la distance parcourue par le faisceau de photons X incident dans le matériau de rang i jusqu'au premier respectivement second volume d'inspection, li'1 respectivement li'2 étant la distance parcourue par le faisceau de photons X rétrodiffusé dans le matériau de rang i depuis le premier respectivement second volume d'inspection ;

e°) on définit une moyenne $\mu'$mean du coefficient combiné d'atténuation $\mu'_{matériau.i}(E_0, E_1, \varepsilon)$ sur une plage donnée desdites énergies $E_1$ des photons X du faisceau de photons X rétrodiffusé ;

f°) on estime la densité $\rho$ du matériau de rang i à partir de la moyenne du coefficient combiné d'atténuation.

2. Procédé d'identification selon la revendication 1, dans lequel le coefficient combiné d'atténuation s'exprime par :

$$\mu'_{matériau.i}(E_0, E_1, \varepsilon) = -\frac{1}{\ell i1 - \ell i2} \ln\left(\frac{Xi1(E_1)}{Xi2(E_1)}\right)$$

3. Procédé d'identification selon l'une des revendications 1 ou 2, dans lequel on calcule un paramètre $\beta(E_1, Matériau.i, \theta)$ décrivant le phénomène de diffusion dans le matériau de rang i à l'aide des mesures des deux flux de photons X $(Xi1(E_1), Xi2(E_1))$ qui s'exprime par :

$$\beta(E_1, Matériau.i, \theta) = \frac{Xi2(E_1)^{\frac{\ell i1}{(\ell i1 - \ell i2)}}}{Xi1(E_1)^{\frac{\ell i2}{(\ell i1 - \ell i2)}}}$$

et on utilise la variation du rapport $\beta(E_1, Matériau.i, \theta)/(k(E_0, \theta)\rho$ en fonction de la densité pour déterminer la nature chimique du matériau de rang i, $k(E_0, \theta)$ étant un paramètre indépendant du matériau de rang i mais dépendant de l'énergie du faisceau de photons X incident, de l'angle de diffusion, et de la position de la source de photons X et du détecteur spectrométrique par rapport au volume inspecté, ce rapport étant sensiblement égal au rapport du numéro atomique effectif $Z_{eff}$ du matériau sur sa masse molaire normalisée $A_{norm}$.

4. Procédé d'identification d'un matériau selon l'une des revendications 1 à 3, dans lequel on calcule les distances li1, li2, li'1, li'2 à partir des positions relatives de la source de photons X (10), du détecteur spectrométrique (11) et de l'objet (100) et si i différent de 1, d'une distance lj parcourue par le faisceau de photons X incident dans chacun des uns ou plusieurs matériaux de rang 1 à i-1 et d'une distance l'j parcourue par le faisceau de photons X rétrodiffusé selon l'angle de diffusion ($\theta$) dans chacun des uns ou plusieurs matériaux de rang 1 à i-1, en :

1°) effectuant des mesures successives du flux de photons X du faisceau de photons X rétrodiffusé pour des volumes d'inspection situés de plus en plus profond, à partir de la couche de surface et espacés d'un pas (p), l'angle de diffusion restant sensiblement constant d'une mesure à l'autre,

2°) calculant pour un premier flux $(X_1(E_1))$, un second et un troisième flux de photons X $(X_2(E_1), X_3(E_1))$ de faisceaux de photons X rétrodiffusés un premier coefficient combiné d'atténuation

$$\mu'_1(E_0, E_1, \varepsilon) = -\frac{1}{lj1 - lj2}\ln\left(\frac{Xj_1(E_1)}{Xj_2(E_1)}\right)$$ et un second coefficient combiné d'atténuation

$$\mu'_2(E_0, E_1, \varepsilon) = -\frac{1}{lj2 - lj3}\ln\left(\frac{Xj_2(E_1)}{Xj_3(E_1)}\right)$$, avec $\varepsilon$ = lj' 1/lj1=lj' 2/lj2=l' j3/lj3, lj1, lj2, lj3 et respectivement l'j1, l'j2, l'j3 étant des distances parcourues par le faisceau de photons X incident et respectivement le faisceau de photons X rétrodiffusé, dans le matériau dans lequel se trouve le volume d'inspection pour lequel la mesure est effectuée, ces distances étant calculées à partir de la position relative entre la source de photons X, le détecteur spectrométrique et l'objet,

3°) comparant le premier et le second coefficient combiné d'atténuation,

4°) dès qu'une différence apparaît, la distance lj recherchée est la plus grande des distances utilisées dans la formule du premier coefficient combiné d'atténuation,

5°) en réitérant les étapes 2°) à 4°) une ou plusieurs fois en prenant trois mesures successives du flux de photons X du faisceau de photons X rétrodiffusé dont deux sont des mesures successives utilisées pour le calcul de l'étape 2°) précédente, le calcul des distances parcourues par le faisceau de photons X incident et rétrodiffusé dans le matériau dans lequel se trouve le volume d'inspection pour lequel la mesure est effectuée prenant en compte les distances lj et lj' déterminées précédemment.

**5.** Procédé d'identification d'un matériau selon la revendication 4, dans lequel le facteur Fi s'exprime par

$$Fi = \prod_{j=1}^{i-1} e^{-\mu'_{matériau.j}(E_1,E_1,\varepsilon).\ell j}$$ , avec $\varepsilon$=lj' /lj et $\mu$' matériau. j $(E_0, E_1, \varepsilon)$ étant un coefficient combiné d'atténuation dans le matériau de rang j, ce coefficient combiné d'atténuation étant calculé à partir de deux mesures du flux de photons X du faisceau de photons X rétrodiffusé pour deux volumes d'inspection situés à deux profondeurs différentes dans le matériau de rang j, l'angle de diffusion restant sensiblement constant au cours des deux mesures, lj étant la distance parcourue par le faisceau de photons X incident dans le matériau de rang j et lj' la distance parcourue par le faisceau de photons X rétrodiffusé dans le matériau de rang j.

**6.** Procédé d'identification d'un matériau selon l'une des revendications 1 à 5, dans lequel le paramètre $k(E_0,\theta)$ s'exprime

par $$k(E_0,\theta) = C(E_0,\theta).F(E_0)\left[\frac{d\sigma_{Kn}(E_0,\theta)}{d\Omega}\delta\omega N_a.\delta V\right]$$ avec $F(E_0)$ débit de fluence du faisceau de photons X incident, $N_a$ nombre d'Avogadro, $\dfrac{d\sigma_{KN}(E_0,\theta)}{d\Omega}$ section efficace différentielle de diffusion par électron par effet Compton approximée par une formule dite de Klein-Nishina, $\delta\omega$ angle solide sous lequel est vu le détecteur spectrométrique depuis chaque point du volume d'inspection $\delta V$, $C(E_0,\theta)$ coefficient d'efficacité du détecteur spectrométrique à l'énergie $E_1$.

**7.** Procédé d'identification d'un matériau selon l'une des revendications précédentes, dans lequel le paramètre $k(E_0, \theta)$ est obtenu par modélisation ou par mesures dans un matériau étalon.

**8.** Dispositif d'identification d'un matériau d'un objet (100) comportant une source de photons X (10) collimatée, destinée à irradier une surface sensiblement plane au moins localement de l'objet avec un faisceau de photons X incident (12), **caractérisé en ce qu'**il comporte en outre :

- un détecteur spectrométrique (11) collimaté destiné à mesurer un flux de photons X d'un faisceau de photons X rétrodiffusé (13) généré après diffusion du faisceau de photons X incident dans un volume d'inspection ($\delta V$) du matériau, le faisceau incident et le faisceau de photons X rétrodiffusé formant un angle de diffusion ($\theta$) dont le sommet est le volume d'inspection,
- des moyens de réglage (101) de la position relative entre la source de photons X, le détecteur spectrométrique et l'objet de manière à placer le volume d'inspection dans au moins deux positions à des profondeurs différentes dans le matériau tout en conservant l'angle de diffusion ($\theta$) sensiblement constant,
- des moyens de traitement (102.a) de deux flux du faisceau de photons X rétrodiffusé mesurés par le détecteur spectrométrique dans les au moins deux positions et de calcul d'un coefficient combiné d'atténuation $\mu'_{matériau}(E_0, E_1, \varepsilon)$ à l'aide de ces deux flux de photons X,
- des moyens d'estimation (102.b) de la densité (p) du matériau à partir du coefficient combiné d'atténuation $\mu'_{matériau}(E_0, E_1, \varepsilon)$ moyenne sur une plage d'énergie des photons X du faisceau de photons X rétrodiffusé donnée.

**9.** Dispositif d'identification selon la revendication 8, dans lequel les moyens de traitement (102.a) et de calcul permettent de calculer un paramètre $\beta(E_1, Matériau, \theta)$ décrivant le phénomène de diffusion dans le matériau de rang i.

**10.** Dispositif d'identification selon la revendication 9, comportant en outre des moyens de détermination (102.c) de la nature chimique du matériau à l'aide du paramètre $\beta(E_1, Matériau, \theta)$, du coefficient combiné d'atténuation $\mu'$ matériau $(E_0, E_1, \varepsilon)$ et de la densité, ces moyens de détermination utilisant la variation du rapport $\beta(E_1, Matériau, \theta)/(k(E_0,\theta)\rho$ en fonction de la densité, $k(E_0,\theta)$ étant un paramètre indépendant du matériau mais dépendant de l'énergie du faisceau de photons X incident, de l'angle de diffusion, et de la position de la source de photons X et du détecteur spectrométrique par rapport au volume inspecté.

**11.** Dispositif d'identification selon l'une des revendications 8 à 10, dans lequel l'angle de diffusion est sensiblement constant pour deux mesures successives.

**12.** Dispositif d'identification selon l'une des revendications 8 à 11, dans lequel les moyens de réglage (101) rapprochent et/ou éloignent l'ensemble source de photons X-détecteur spectrométrique par rapport à l'objet et rapprochent et/ou éloignent la source de photons X du détecteur spectrométrique.

**13.** Dispositif d'identification selon la revendication 8, dans lequel les moyens de réglage (101) sont pas à pas, lors du rapprochement et/ou de l'éloignement de l'ensemble source de photons X-détecteur spectrométrique par rapport à l'objet, le pas étant plus petit que l'épaisseur d'une couche de matériau de l'objet de manière à ce que le volume d'inspection puisse prendre au moins deux positions dans la couche de matériau.

**Patentansprüche**

**1.** Verfahren zum Erkennen eines Materials eines Objekts, wobei dieses Material mit einer Ordnung i versehen ist (i ganzzahlig), wobei i eins beträgt, wenn es an der Oberfläche liegt, und größer als eins ist, wenn es unter i-1 Schichten vergraben liegt, wobei

a°) eine im Wesentlichen ebene Fläche des Objekts (100) zumindest bereichsweise mit einem einfallenden Photonenstrahl X bestrahlt wird, der von einer kollimierten Quelle (10) von Photonen X erzeugt wird; **dadurch gekennzeichnet, dass**

b°) mit Hilfe eines kollimierten spektrometrischen Sensors (11) ein erster Photonenstrom X ($Xi1(E_1)$) eines Photonenstrahls X gemessen wird, der mit einer Energie E1 unter einem gegebenen Diffusionswinkel ($\theta$) zurückgestreut wird (13), der nach Diffusion des Photonenstrahls X erzeugt wird, der in ein erstes Prüfvolumen zum Prüfen des Materials der Ordnung i einfällt, dass sich in einer ersten Tiefe in dem Material der Ordnung i liegt;

c°) mit Hilfe des kollimierten spektrometrischen Sensors ein zweiter Photonenstrom X ($Xi2(E_1)$) eines Photonenstrahls X gemessen wird, der mit der Energie $E_1$ unter dem gleichen gegebenen Diffusionswinkel zurückgestreut wird, der nach Diffusion des Photonenstrahls X erzeugt wird, der in ein zweites Prüfvolumen zum Prüfen des Materials der Ordnung i einfällt, das in einer zweiten Tiefe in dem Material der Ordnung i liegt, wobei die zweite Tiefe sich von der ersten Tiefe unterscheidet;

d°) mit Hilfe der Messungen der beiden Photonenströme X ($Xi1(E_1)$; $Xi2(E_1)$) ein kombinierter Dämpfungskoeffizient $\mu'_{Material.i}$ ($E_0$, $E_1$, $\varepsilon$) berechnet wird, bei dem Eo die Energie der Photonen X des einfallenden Photonenstrahls X ist und $E_1$ die Energie der Photonen X des unter dem gegebenen Diffusionswinkel zurückgestreuten Photonenstrahls X ist, umfassend einen natürlichen Logarithmus von dem Verhältnis zwischen den beiden Strömen ($Xi1(E_1)$; $Xi2(E_1)$),

wobei $\varepsilon$ ein Verhältnis derart ist, dass $\varepsilon$ = li'1/li1 = li'2/li2 ist, wobei li1 bzw. li2 die von dem in das Material der Ordnung i einfallenden Photonenstrahl X zurückgelegte Entfernung bis zu dem ersten bzw. zweiten Prüfvolumen ist, wobei li'1 bzw. li'2 die von dem in das Material der Ordnung i zurückgestreuten Photonenstrahl X zurückgelegte Entfernung von dem ersten bzw. zweiten Prüfvolumen ist,

e°) ein Mittelwert $\mu'$mean des kombinierten Dämpfungskoeffizienten $\mu'_{Material.i}$ ($E_0$, $E_1$, $\varepsilon$) über einem gegebenen Bereich der Energien $E_1$ der Photonen X des zurückgestreuten Photonenstrahls X ist;

f°) die Dichte p des Materials der Ordnung i ausgehend von dem Mittelwert des kombinierten Dämpfungskoeffizienten ist.

**2.** Erkennungsverfahren nach Anspruch 1, wobei der kombinierte Dämpfungskoeffizient ausgedrückt wird durch:

$$\mu'_{matériau.i}(E_0, E_1, \varepsilon) = -\frac{1}{\ell i1 - \ell i2} \ln\left(\frac{Xi1(E_1)}{Xi2(E_1)}\right)$$

**3.** Erkennungsverfahren nach einem der Ansprüche 1 oder 2, wobei ein Parameter $\beta(E1, Material.i, \theta)$ berechnet wird, der die Diffusionserscheinung in dem Material der Ordnung i mit Hilfe der Messungen der beiden Photonenströme X ($i1(E_1)$, $Xi2(E_1)$) beschreibt, die ausgedrückt wird mit:

$$\beta(E_1, Matériau.i, \theta) = \frac{Xi2(E_1)^{\frac{\ell i1}{(\ell i1 - \ell i2)}}}{Xi1(E_1)^{\frac{\ell i2}{(\ell i1 - \ell i2)}}}$$

und die Veränderung von dem Verhältnis $\beta(E_1, Material.i, \theta)/(k(E_0, \theta) \rho$ in Abhängigkeit von Dichte dazu verwendet wird, die chemische Beschaffenheit des Materials der Ordnung i zu bestimmen, wobei $k(E_0, \theta)$ ein Parameter ist, der von dem Material der Ordnung i unabhängig ist, jedoch von der Energie des einfallenden Photonenstrahls X, vom Diffusionswinkel und von der Position der Photonenquelle X und des spektrometrischen Sensors in Bezug auf das geprüfte Volumen abhängt, wobei dieses Verhältnis im Wesentlichen gleich dem Verhältnis der effektiven Atomzahl $Z_{eff}$ des Materials zu seiner normierten Molmasse $A_{norm}$ ist.

**4.** Verfahren zum Erkennen eines Materials nach einem der Ansprüche 1 bis 3, wobei die Entfernungen li1, li2, li'1, li'2 ausgehend von Relativpositionen der Photonenquelle X (10), des spektrometrischen Sensors (11) und des Objekts (100) und, wenn i von 1 verschieden ist, einer Entfernung lj berechnet wird, die von dem in jedes der oder in mehrere Materialien der Ordnung 1 bei i-1 zurückgelegt wird und von einer Entfernung l'j, die von dem unter dem Diffusionswinkel (θ) in jedes der oder in mehrere Materialien der Ordnung 1 bei i-1 zurückgelegt wird, indem:

1°) aufeinanderfolgende Messungen des Photonenstroms X des zurückgestreuten Photonenstrahls X bei Prüfvolumen erfolgen, die immer tiefer liegen, und zwar ausgehend von der Oberflächenschicht, und um einen Teilungsschritt (p) beabstandet sind, wobei der Diffusionswinkel von einer Messung zur anderen im Wesentlichen konstant bleibt,
2°) für einen ersten Strom ($X_1(E_1)$), einen zweiten und einen dritten Photonenstrom X ($X_2 (E_e 1)$, $X_3 (E_1)$ von zurückgestreuten Photonenstrahlen X ein erster kombinierter Dämpfungskoeffizient

$$\mu'_1(E_0, E_1, \varepsilon) = -\frac{1}{lj1 - lj2} \ln\left(\frac{Xj_1(E_1)}{Xj_2(E_1)}\right)$$

und ein zweiter kombinierter Dämpfungskoeffizient

$$\mu'_2(E_0, E_1, \varepsilon) = -\frac{1}{lj2 - lj3} \ln\left(\frac{Xj_2(E_1)}{Xj_3(E_1)}\right)$$

berechnet werden mit ε = lj'1/lj1 = lj'2/lj2 = l'j3/lj3, wobei lj1, lj2, lj3 bzw. l'j1,l'j2, l'j3 Entfernungen sind, die von dem in das Material einfallenden Photonenstrahl X bzw. zurückgestreuten Photonenstrahl zurückgelegt werden, in welchem Material sich das Prüfvolumen befindet, bei dem die Messung durchgeführt wird, wobei diese Entfernungen ausgehend von der Relativposition zwischen der Photonenquelle X, dem spektrometrischen Sensor und dem Objekt berechnet werden,
3°) der erste und der zweite kombinierte Dämpfungskoeffizient verglichen werden,
4°) sobald eine Differenz erscheint, die gesuchte Entfernung lj die größte der in der Formel des ersten kombinierten Dämpfungskoeffizienten verwendeten Entfernungen ist,
5°) die Schritte 2°) bis 4°) einmal oder mehrmals wiederholt werden, indem drei aufeinanderfolgende Messungen des Photonenstroms X des zurückgestreuten Photonenstrahls X erfolgen, von denen zwei aufeinanderfolgende Messungen sind, die für die Berechnung von dem vorstehenden Schritt 2°) verwendet werden, wobei die Berechnung der von dem einfallenden und dem zurückgestreuten Photonenstrahl X in dem Material zurückgelegten Entfernungen, in welchem Material sich das Prüfvolumen befindet, bei dem die Messung erfolgt ist, zuvor bestimmte Entfernungen lj und lJ' berücksichtigt.

**5.** Verfahren zum Erkennen eines Materials nach Anspruch 4, wobei der Faktor Fi ausgedrückt wird mit

$$Fi = \prod_{j=1}^{i-1} e^{-\mu'_{matériau.j}(E_0,E_1,\varepsilon).\ell j}$$

mit $\varepsilon$ = lj'/lj und wobei $\mu'_{Material.j}$ (E0, E1, $\varepsilon$) ein kombinierter Dämpfungskoeffizient in dem Material der Ordnung j ist, wobei dieser kombinierte Dämpfungskoeffizient ausgehend von zwei Messungen des Photonenstroms X des zurückgestreuten Photonenstrahls bei zwei Prüfvolumen ist, die in zwei unterschiedlichen Tiefen in dem Material der Ordnung j liegen, wobei der Diffusionswinkel im Laufe der beiden Messungen im Wesentlichen Kontakt bleiben, wobei lj die Entfernung ist, die von dem einfallenden Photonenstrahl X in dem Material der Ordnung j und lj' die Entfernung ist, die von dem in das Material der Ordnung j zurückgestreuten Photonenstrahl X zurückgelegt wird.

6. Verfahren zum Erkennen eines Materials nach einem der Ansprüche 1 bis 5, wobei der Parameter $k(E_0, \theta)$ ausgedrückt wird durch

$$k(E_0,\theta) = C(E_0,\theta).F(E_0)\left[\frac{d\sigma_{Kn}(E_0,\theta)}{d\Omega}\delta\omega N_a.\delta V\right]$$

mit $F(E_0)$ Flussdichte des einfallenden Photonenstrahls, $N_a$ Avogadro-Zahl, $\dfrac{d\sigma_{KN}(E_0,\theta)}{d\Omega}$ differentieller Wirkungsquerschnitt pro Elektron durch angenäherten Compton-Effekt durch eine sogenannte Klein-Nishina-Formel, wobei $\delta\omega$ der Raumwinkel ist, unter welchem der spektrometrische Sensor von jedem Punkt des Prüfvolumens $\delta V$ gesehen wird, und $C(E_0, \theta)$ der Wirkungsgrad des spektrometrischen Sensors bei der Energie $E_1$ ist.

7. Verfahren zum Erkennen eines Materials nach einem der vorangehenden Ansprüche, wobei der Parameter $k(E_0, \theta)$ durch Modellbildung oder durch Messungen in einem Standardmaterial erhalten wird.

8. Vorrichtung zum Erkennen eines Materials eines Objekts (100), enthaltend eine kollimierte Photonenquelle X (10), die dazu bestimmt ist, eine im Wesentlichen ebene Fläche des Objekts zumindest bereichsweise mit einem einfallenden Photonenstrahl X (12) zu bestrahlen, **dadurch gekennzeichnet, dass** sie ferner enthält:

   - einen kollimierten spektrometrischen Sensor (11), der dazu bestimmt ist, einen Photonenstrom X eines zurückgestreuten Photonenstrahls X (13) zu messen, der nach der Diffusion des einfallenden Photonenstrahls X erzeugt wird, der in ein Prüfvolumen ($\delta V$) des Materials einfällt, wobei der einfallende Strahl und der zurückgestreute Photonenstrahl X einen Diffusionswinkel ($\theta$) bilden, dessen Scheitel das Prüfvolumen ist,
   - Einstellmittel (101) zum Einstellen der Relativposition zwischen der Photonenquelle X, dem Spektrometer und dem Objekt, so dass das Prüfvolumen in zumindest zwei Positionen in unterschiedlichen Tiefen in dem Material angeordnet wird und dabei der Diffusionswinkel ($\theta$) im Wesentlichen konstant gehalten wird,
   - Verarbeitungsmittel (102.a) zum Verarbeiten von zwei Strömen des zurückgestreuten Photonenstrahls X, die von dem spektrometrischen Sensors in den zumindest zwei Positionen gemessen werden, und zum Berechnen eines kombinierten Dämpfungskoeffizienten $\mu'_{Material}$ ($E_0, E_1, \varepsilon$) mit Hilfe dieser beiden Photonenströme X,
   - Abschätzmittel (102.b) zum Abschätzen der Dichte (p) des Materials ausgehend von dem kombinierten Dämpfungskoeffizienten $\mu'_{Material}$ ($E_0, E_1, \varepsilon$), der über einen Bereich der Energie der Photonen X des gegebenen, zurückgestreuten Photonenstrahls X gemittelt ist.

9. Erkennungsvorrichtung nach Anspruch 8, wobei die Verarbeitungs- (102.a) und Rechenmittel gestatten, einen Parameter $\beta(E1, Material.i, \theta)$ zu berechnen, der die Diffusionserscheinung in dem Material der Ordnung i beschreibt.

10. Erkennungsvorrichtung nach Anspruch 9, ferner enthaltend Mittel (102.c) zum Bestimmen der chemischen Beschaffenheit des Materials mit Hilfe des Parameters $\beta(E1, Material.i, \theta)$, des kombinierten Dämpfungskoeffizienten

$\mu'_{Material}$ (E$_0$, E$_1$, $\varepsilon$) und der Dichte, wobei diese Bestimmungsmittel die Veränderung von dem Verhältnis $\beta(E_1, Material.i, \theta)$ / (k(E$_0$, $\theta$) $\rho$ in Abhängigkeit von der Dichte verwenden, wobei k(E$_0$, $\theta$) ein Parameter ist, der von dem Material der Ordnung i unabhängig ist, jedoch von der Energie des einfallenden Photonenstrahls X, vom Diffusionswinkel und von der Position der Photonenquelle X und des spektrometrischen Sensors in Bezug auf das geprüfte Volumen abhängt.

11. Erkennungsvorrichtung nach einem der Ansprüche 8 bis 10, wobei der Diffusionswinkel bei zwei aufeinanderfolgenden Messungen im Wesentlichen konstant ist.

12. Erkennungsvorrichtung nach einem der Ansprüche 8 bis 11, wobei die Einstellmittel (101) die Einheit aus Photonenquelle X und spektrometrischem Sensor bezüglich des Objekts annähern und/oder entfernen und die Photonenquelle X des spektrometrischen Sensors annähern und/oder entfernen.

13. Erkennungsvorrichtung nach Anspruch 8, wobei die Einstellmittel (101) bei der Annäherung und/oder Entfernung der Einheit aus Photonenquelle X und spektrometrischem Sensor bezüglich des Objekts schrittweise arbeiten, wobei der Schritt kleiner ist als die Dicke einer Materialschicht des Objekts, so dass das Prüfvolumen zumindest zwei Positionen in der Materialschicht einnehmen kann.

**Claims**

1. Method for identifying a material of an object, said material being provided with a rank i (i whole number), i being equal to one if it is at the surface and being greater than one if it is buried under i-1 layers, wherein:

    a°) a substantially flat surface, at least locally, of the object (100) is irradiated with an incident beam of X photons (12) generated by a collimated source (10) of X photons;
    b°) using a collimated spectrometric detector (11), a first flux of X photons of a backscattered beam of X photons (13) at an energy E$_1$ is measured along a given scattering angle ($\theta$), generated after scattering of the incident beam of X photons in a first inspection volume of the material of rank i, located at a first depth in the material of rank i;
    c°) using the collimated spectrometric detector, a second flux of X photons of a backscattered beam of X photons at said energy E1 is measured along the same given scattering angle, generated after scattering of the incident beam of X photons in a second inspection volume of the material of rank i, located at a second depth in the material of rank i, the second depth being different from the first depth;
    d°) using the measurements of the two fluxes of X photons (Xi1 (E$_1$), Xi2 (E1)), a combined attenuation coefficient u'$_{materiau.i}$ (E$_0$, E$_1$, $\varepsilon$) is calculated in which E$_0$ is the energy of the X photons of the incident beam of X photons and E$_1$ the energy of the X photons of the backscattered beam of X photons along the given scattering angle, comprising a neperian logarithm of the ratio between the two fluxes (Xi1(E$_1$), Xi$_2$(E$_1$)),
    $\varepsilon$ is a ratio such that $\varepsilon$= li'1/li1= li'2/li2, li1 respectively li2 being the distance travelled by the incident beam of X photons in the material of rank i up to the first respectively second inspection volume, li'1 respectively being the distance travelled by the backscattered beam of X photons in the material of rank i from the first respectively second inspection volume;
    e°) a mean $\mu'$mean of the combined attenuation coefficient $\mu'_{materiau.i}$ (E$_0$, E$_1$, $\varepsilon$) is defined over a given range of said energies E$_1$ of the X photons of the backscattered beam of X photons;
    f°) the density p of the material of rank i is estimated from the mean of the combined attenuation coefficient.

2. Method for identifying a material according to claim 1, wherein the combined attenuation coefficient is expressed by:

$$\mu'_{mat\acute{e}riau.i} (E_0, E_1, \varepsilon) = -\frac{1}{\ell i1 - \ell i2} ln\left(\frac{Xi1(E_1)}{Xi2(E_1)}\right)$$

3. Method for identifying a material according to one of claims 1 or 2, wherein a parameter $\beta(E_1, Mat\acute{e}riau.i, \theta)$ is calculated describing the phenomenon of scattering in the material of rank i using measurements of the two fluxes of X photons (Xi1(E$_1$), Xi2 (E1)) which is expressed by:

$$\beta(E_1, Mat\acute{e}riau.i, \theta) = \frac{Xi2(E_1)^{\frac{\ell i1}{(\ell i1 - \ell i2)}}}{Xi1(E_1)^{\frac{\ell i2}{(\ell i1 - \ell i2)}}}$$

and the variation in the ratio $\beta(E_1, \textbf{\textit{Mat\'eriau.i,}}\theta)$ / (k $(E_0, \theta)\rho$ as a function of the density is used to determine the chemical nature of the material of rank i, $k(E_0,\theta)$ being a parameter independent of the material of rank i but dependent on the energy of the incident beam of X photons, the scattering angle, and the position of the source of X photons and the spectrometric detector with respect to the inspected volume, said ratio being substantially equal to the ratio of the effective atomic number $Z_{eff}$ of the material over the normalised molar mass $A_{norm}$.

4. Method for identifying a material according to one of claims 1 to 3, wherein the distances li1, li2, li'1, li'2 are calculated from relative positions of the source of X photons (10), the spectrometric detector (11) and the object (100) and if i is different from 1, a distance lj travelled by the incident beam of X photons in each of the one or more materials of rank 1 to i-1 and a distance l'j travelled by the backscattered beam of X photons along the scattering angle ($\theta$) in each of the one or more materials of rank 1 to i-1, by:

    1°) making successive measurements of the flux of X photons of the backscattered beam of X photons for inspection volumes located at greater and greater depths, from the surface layer and spaced apart by a step (p), the scattering angle remaining substantially constant from one measurement to the other,

    2°) calculating for a first flux ($X_1(E_1)$), a second and a third flux of X photons ($X_2(E_1)$, $X_3(E_1)$) of backscattered beams of X photons a first combined attenuation coefficient $\mu'_1(E_0, E_1, \varepsilon) = -\frac{1}{lj1 - lj2}\ln\left(\frac{Xj_1(E_1)}{Xj_2(E_1)}\right)$

    and a second combined attenuation coefficient $\mu'_2(E_0, E_1, \varepsilon) = -\frac{1}{lj2 - lj3}\ln\left(\frac{Xj_2(E_1)}{Xj_3(E_1)}\right)$, with $\varepsilon$ = lj'1/lj1=lj'2/lj2=l'j3/lj3, lj1, lj2, lj3 and respectively l'j1, l'j2, l'j3 being distances travelled by the incident beam of X photons and respectively the backscattered beam of X photons, in the material in which is located the inspection volume for which the measurement is made, these distances being calculated from the relative position between the source of X photons, the spectrometric detector and the object,

    3°) comparing the first and the second combined attenuation coefficients,

    4°) as soon as a difference appears, the searched for distance lj is the greatest of the distances used in the formula of the first combined attenuation coefficient,

    5°) reiterating steps 2°) to 4°) one or more times while taking three successive measurements of the flux of X photons of the backscattered beam of X photons, two of which are successive measurements used for the calculation of the preceding step 2°), the calculation of the distances travelled by the incident and backscattered beam of X photons in the material in which is located the inspection volume for which the measurement is carried out taking into account the distances lj and lj' determined previously.

5. Method for identifying a material according to claim 4, wherein the factor Fi is expressed by $Fi = \prod_{j=1}^{i-1} e^{-\mu'_{mat\acute{e}riau.j}(E_0, E_1, \varepsilon)\cdot\ell j}$, with $\varepsilon$=lj'/lj and $\mu'_{mat\acute{e}riau.j}(E_0, E_1, \varepsilon)$ being a combined attenuation coefficient in the material of rank j, this combined attenuation coefficient being calculated from two measurements of the flux of X photons of the backscattered beam of X photons for two inspection volumes located at two different depths in the material of rank j, the scattering angle remaining substantially constant during the two measurements, lj being the distance travelled by the incident beam of X photons in the material of rank j and lj' the distance travelled by the backscattered beam of X photons in the material of rank j.

6. Method for identifying a material according to one of claims 1 to 5, wherein the parameter $k(E_0,\theta)$ is expressed by $$k(E_0, \theta) = C(E_0, \theta).F(E_0)\left[\frac{d\sigma_{Kn}(E_0,\theta)}{d\Omega}\delta\omega N_a.\delta V\right]$$ with F $(E_0)$ the fluence rate of the beam of incident

X photons, $N_a$ Avogadro's number, $\dfrac{d\sigma_{KN}(E_0,\theta)}{d\Omega}$ the differential scattering cross section per electron by Compton effect approximated by a formula called Klein-Nishina, $\omega\delta$ the solid angle under which the spectrometric detector is seen from each point of the inspection volume $\delta V$, $C(E_0, \theta)$ the efficiency coefficient of the spectrometric detector at the energy $E_1$.

7. Method for identifying a material according to one of the preceding claims, wherein the parameter $k(E_0, \theta)$ is obtained by modelling or by measurements in a standard material.

8. Device for identifying a material of an object (100) comprising a collimated source of X photons (10) intended to irradiate a substantially flat surface, at least locally, of the object with an incident beam of X photons (12), **characterized in that** it further comprises:

- a collimated spectrometric detector (11) intended to measure a flux of X photons of a backscattered beam of X photons (13) generated after scattering of the incident beam of X photons in an inspection volume ($\delta V$) of the material, the incident beam and the backscattered beam of X photons forming a scattering angle ($\theta$), the vertex of which is the inspection volume,
- means for adjusting (101) the relative position between the source of X photons, the spectrometric detector and the object so as to place the inspection volume in at least two positions at different depths in the material while maintaining the scattering angle ($\theta$) substantially constant,
- means for processing (102.a) two fluxes of the backscattered beam of X photons measured by the spectrometric detector in the at least two positions and for calculating a combined attenuation coefficient $\mu'_{materiau}$ ($E_0$, $E_1$, $\varepsilon$) by means of these two fluxes of X photons,
- means for estimating (102.b) the density (p) of the material from the combined attenuation coefficient $\mu'_{materiau}$ ($E_0$, $E_1$, $\varepsilon$) averaged over a given range of energy of the X photons of the backscattered beam of X photons.

9. Device for identifying a material according to claim 8, wherein the means for processing (102.a) and for calculating make it possible to calculate a parameter $\beta$(***$E_1$, Materiau,*** $\theta$) describing the scattering phenomenon in the material of rank i.

10. Device for identifying a material according to claim 9, further comprising means of determination for determining (102.c) the chemical nature of the material using the parameter $\beta$ (***$E_1$,Matériau,*** $\theta$)**,** the combined attenuation coefficient $\mu'_{matériau}(E_0,E_1,\varepsilon)$ and the density, these means of determination using the variation in the ratio $\beta$(***$E_1$,Materiau,***$\theta$) / (k($E_0,\theta$)p as a function of the density, k ($E_o$, 8) being a parameter independent of the material but dependent on the energy of the incident beam of X photons, the scattering angle, and the position of the source of X photons and the spectrometric detector with respect to the inspected volume.

11. Device for identifying a material according to one of claims 8 to 10, wherein the scattering angle is substantially constant for two successive measurements.

12. Device for identifying a material according to one of claims 8 to 11, wherein the means for adjusting (101) bring together and/or move apart the source of X photons-spectrometric detector assembly with respect to the object and bring together and/or move apart the source of X photons and the spectrometric detector.

13. Device for identifying a material according to claim 8, wherein the means for adjusting (101) are step by step, while bringing together and/or moving apart the source of X photons-spectrometric detector assembly with respect to the object, the step being smaller than the thickness of a layer of material of the object so that the inspection volume can take at least two positions in the layer of material.

FIG.1

FIG.2

FIG.3

FIG.4

FIG.5

FIG.6A

FIG.6B

FIG.7

FIG.8

FIG.9

FIG.10

camphre
cellulose
delrin
nylon
PETP
plexiglas
polyethylene
polystyrene
teflon
kynar
PETN
polyvinyle
DNT
dynamite gomme
gelamon 22
hexogene
acide picrique
amonal
hmxs
nitrateammonium
nitropentrite
nitroglycol
octanitrocubane
poudre noire
tetrazene
TNT
EAU
ACETONE
NITROGLYCERINE

FIG.11A

FIG.11B

FIG.11C

FIG.12

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2008253525 A
- US 4817122 A
- JP 61193057 A

**Littérature non-brevet citée dans la description**

- **SHIRO TUZI et al.** Locating the positions of Reinforcing bars in reinforced concrete using backscattered gamma rays. *International Journal of radiation Applications and Instrumentation,* 1990, vol. 41 (10/11
- **HUBBELL et al.** Atomic form factors, incohérent scattering functions, and photon scattering cross sections. *J. : Phys. Chem. Ref.,* 1975, 71-538
- *J. : PHYS. CHEM. REF.,* 1977, vol. 6, 615-616